# EUROPEAN PATENT APPLICATION

(11) **EP 4 765 800 A1**
(43) Date of publication of application: **24.06.2026**
(21) Application number: 25224819.0
(22) Date of filing: 18.12.2025
(51) Int. Cl.: H04N 19/103, H04N 19/132, H04N 19/167, H04N 19/17

(54) **SYSTEM AND METHOD FOR REDUCING THE DATA VOLUME DOWNLINKED FROM SPACECRAFT TO GROUND STATIONS**

(30) Priority: 20.12.2024 US 202463736903 P; 16.12.2025 US 202519420961
(71) Applicant: Ubotica Technologies Limited, Dublin D11 KXN4 (IE)
(72) Inventor: DUNNE, Aubrey, Dublin, D11 KXN4 (IE); DOODY, John, Dublin, D11 KXN4 (IE)
(74) Representative: FRKelly

(57) **Abstract**

Systems and methods for reducing the data volume downlinked from a spacecraft to a ground station are disclosed. A processing system onboard the spacecraft captures image data from one or more imaging sensors and forms an image stack of spectral bands that is partitioned into tile stacks corresponding to common spatial regions. A trained artificial intelligence model performs inference on each tile stack to generate a quantitative tile stack score indicative of predicted usefulness for one or more mission objectives. Based on the tile stack scores, the processing system selects for each tile stack a lossless compression action, a lossy compression action, or a discarding action, compresses tile stacks according to the selected actions, assembles compressed tile data into a compressed image data file, and transmits the compressed image data file to the ground station over a downlink communication channel.

## Description

### RELATED APPLICATIONS

This application claims the benefit of priority to U.S. Provisional Patent Application No. 63/736,903 entitled "System and Method for Reducing the Data Volume Downlinked from Spacecraft to Ground Stations", filed on December 20, 2024.

### BACKGROUND

Computing architectures in which processing occurs near where data is generated have become increasingly important as connected devices proliferate at the edges of communication networks. Such "edge" deployments may include sensors, vehicles, industrial equipment, and space-based platforms that generate large volumes of data while operating with constrained local resources and intermittent or high-latency connectivity to centralized computing infrastructure.

Remote sensing and Earth-observation systems exemplify th ese trends. Imaging payloads on spacecraft and other platforms may capture very large images or multi-band image stacks, including multispectral or hyperspectral datasets, for scientific, commercial, or security applications. The resulting data volumes can be substantial relative to available storage, on-board processing capacity, and the bandwidth and contact windows of downlink channels between the platform and ground stations.

Advances in artificial intelligence, machine learning, and data compression provide tools that can be applied to this environment, but deploying them in power-limited, memory-limited, or bandwidth-limited systems presents technical challenges. In particular, there is a need for techniques that allow imaging platforms operating at or near the network edge to represent and transmit captured data efficiently while enabling high-quality reconstruction and analysis at centralized facilities, within the constraints of available compute, energy, and link capacities and capabilities.

### SUMMARY

Various aspects include methods of reducing a data volume downlinked from a spacecraft to a ground station, which may include capturing image data from at least one imaging sensor onboard the spacecraft and generating an image stack which may include one or more spectral bands, dividing the image stack into one or more tile stacks, each tile stack which may include one or more tiles corresponding to a common spatial region within the image stack and one or more spectral bands of the image stack, performing machine learning inference on each tile stack using a trained artificial intelligence model and generating for each tile stack a tile stack score that quantitatively represents a predicted usefulness of the tile stack for at least one mission objective, selecting, for each tile stack, a compression action that may be a lossless compression action, a lossy compression action, or a discarding action, the compression action for the tile stack being selected based on the tile stack score generated for the tile stack, compressing the tile stacks according to the compression actions selected for the tile stacks and generating compressed tile stack data for tile stacks that are not subject to the discarding action, assembling the compressed tile stack data into a compressed image data file, and transmitting the compressed image data file to the ground station over a downlink communication channel.

Some aspects may further include extracting imaging sensor metadata associated with the image data, and adding the imaging sensor metadata and tile stack metadata to the compressed image data file, the tile stack metadata describing one or more of the tile stacks, the tile stack scores, and the compression actions. Some aspects may further include generating, for each tile stack, a tile stack subset that may include fewer tiles than the tile stack, generating, for each tile stack, an inference input derived from the tile stack subset, and executing the trained artificial intelligence model on the inference input to generate the tile stack score for the tile stack.

In some aspects, performing machine learning inference on each tile stack using the trained artificial intelligence model may include executing a segmentation network to generate, for each tile stack, a segmentation mask that assigns a useful label or a non-useful label to each pixel location of the tile stack.

In some aspects, compressing the tile stacks according to the compression actions selected for the tile stacks may include generating, for each tile stack, a modified tile stack by assigning a constant pixel value to pixel locations identified as non-useful by the segmentation mask, and retaining original pixel values for pixel locations identified as useful by the segmentation mask, and compressing each modified tile stack according to the compression action selected for the tile stack that corresponds to the modified tile stack.

In some aspects, compressing the tile stacks according to the compression actions selected for the tile stacks may include applying the lossless compression action to useful pixel locations identified by the segmentation mask when the compression action selected for a tile stack may be the lossless compression action, applying the lossy compression action with a first lossy quality parameter to useful pixel locations identified by the segmentation mask when the compression action selected for the tile stack may be the lossy compression action, and applying the lossy compression action with a second lossy quality parameter to non useful pixel locations identified by the segmentation mask when the compression action selected for the tile stack may be the lossy compression action, the second lossy quality parameter having a lower quality level than the first lossy quality parameter.

In some aspects, compressing the tile stacks according to the compression actions selected for the tile stacks may include executing a JPEG family encoder on at least one of a system on chip, a field programmable gate array, a graphics processing unit, or a central processing unit.

In some aspects, compressing the tile stacks according to the compression actions selected for the tile stacks may include determining, for each tile stack, a tile count value that equals a number of tiles in the tile stack, selecting image compression for the tile stack when the tile count value may be less than or equal to a tile count threshold, and selecting video compression for the tile stack when the tile count value may be greater than the tile count threshold.

Some aspects may further include selecting the lossless compression action for each tile stack having the tile stack score less than a first threshold, selecting the discarding action for each tile stack having the tile stack score greater than a second threshold, and selecting the lossy compression action for each tile stack having the tile stack score greater than or equal to the first threshold and less than or equal to the second threshold.

Some aspects may further include selecting, for a first tile stack of the tile stacks, the lossless compression action or the lossy compression action as a video compression action, ordering tiles of the first tile stack across the one or more spectral bands according to center wavelengths of the one or more spectral bands to form a tile sequence having a monotonically increasing ordering in wavelength or a monotonically decreasing ordering in wavelength, providing tiles of the tile sequence to a video encoder so that each tile of the tile sequence may be provided as a frame, receiving, from the video encoder, a compressed video bitstream for the tile sequence, and storing the compressed video bitstream as at least a portion of the compressed tile stack data for the first tile stack.

Some aspects may further include selecting, for each tile stack selected for the lossy compression action, a lossy quality parameter based on the tile stack score for the tile stack, and compressing the tile stack selected for the lossy compression action using the lossy quality parameter. In some aspects, assembling the compressed tile stack data into the compressed image data file may include further compressing, in the compressed image data file, the compressed tile stack data for a first tile stack together with the compressed tile stack data for at least one other tile stack.

Further aspects may include a computing device (e.g., edge device, spacecraft, etc.) having a processor configured with processor-executable instructions to perform various operations corresponding to the methods discussed above. Further aspects may include a computing device having various means for performing functions corresponding to the method operations discussed above. Further aspects may include a non-transitory processor-readable storage medium having stored thereon processor-executable instructions configured to cause a processor to perform various operations corresponding to the method operations discussed above.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1A is component block diagram illustrating a system, which includes edge devices in the form of satellites and a centralized site connected to a transmission site, that is suitable for implementing various embodiments.
FIG. 1B is component block diagram illustrating an image composed of bands and tiles.
FIG. 2 is an activity diagram illustrating a method of reducing the data volume downlinked from a spacecraft to a ground station.
FIGs. 3 and 4 are process flow diagrams illustrating a first compression method of reducing the data volume downlinked from a spacecraft to a ground station.
FIGs. 5A and 5B are process flow diagrams illustrating a video compression method (or another compression method) of reducing the data volume downlinked from a spacecraft to a ground station.
FIG. 6 is a process flow diagram illustrating a second compression method of reducing the data volume downlinked from a spacecraft to a ground station.
FIGs. 7A-7C are process flow diagrams illustrating a decompression method for use with the compression methods of reducing the data volume downlinked from a spacecraft to a ground station.
FIGs. 8-12 are process flow diagrams illustrating methods for reducing a data volume downlinked from a spacecraft to a ground station in accordance with various embodiments.
FIG. 13 is a component diagram of an system-on-chip (SOC) suitable for implementing some embodiments
FIGs. 14A and 14B are component diagrams of an edge device in the form of a satellite that is suitable for implementing some embodiments.
FIG. 15 is a component diagram of a server that is suitable for implementing some embodiments.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration". Any implementation described herein as "exemplary" is not necessarily to be construed as preferred or advantageous over other implementations.

For ease of reference and to focus the description on the relevant features or functionalities, some embodiments are described herein with reference to a centralized site on Earth communicating with spacecraft deployed in space. However, it should be understood that the described features and functionalities may be applicable to other types of devices, systems, configurations, or deployments, and nothing in this application should be used to limit the claims or disclosures herein to a centralized site on Earth, a spacecraft, or any other specific edge device unless expressly recited as such within the claims.

In overview, the embodiments include methods and systems for reducing the data volume downlinked from a spacecraft to a ground station. For example, a processing system in a spacecraft may be configured to capture image data from at least one imaging sensor and generate an image or image stack (herein collectively "image stack") that includes multiple spectral bands. The processing system may divide the image stack into spatial units, which may be individual tiles or multi-band tile aggregates (herein collectively "tile stacks"), and execute an artificial intelligence (AI) model on each tile stack to generate a tile score that characterizes the predicted usefulness for at least one mission objective. Based on each tile score, the processing system may select a compression action (e.g., a lossless compression action, a lossy compression action, a discarding action, etc.). The processing system may apply the selected compression actions to the tile stacks, generate compressed tile data for tile stacks associated with non-discard compression actions, assemble the compressed tile data and associated metadata into a compressed image data file, and transmit the compressed image data file to the ground station over a downlink communication channel.

The embodiments may allow a spacecraft or another remote device to determine the image content that provides adequate mission value before transmission. Rather than downlinking an entire raw image stack, the processing system may evaluate each tile stack to determine whether it contains useful content (e.g., clear ground, target of interest, etc.), discard tile stacks with low mission value, and/or intelligently determine whether to transmit the remaining tile stacks with lossless compression or with lossy compression. The processing system may represent tile stack content using embedding vectors and residual tile stacks, apply video-style compression across spectral bands to increase compression efficiency, and perform other similar operations that allow ground operators to receive a higher proportion of mission-relevant imagery per orbit at effective quality levels that exceed those obtained from uniform compression applied to the full image stack.

Unlike conventional solutions that apply standard image compression or generic AI classification without coordination, the embodiments may integrate AI inference, tile selection, classical image compression, video compression, pixel splitting, and optional embedding-based compression into a unified, tile-driven control loop that governs which tile stacks remain after selection and how the remaining tile stacks enter compression pipelines. In some embodiments, the processing system may geometrically align spectral bands and reorder them by wavelength to improve temporal coherence in video encoders. In some embodiments, the processing system may split pixel values into high-order and low-order bits, apply conservative compression to the high-order bits, and apply more aggressive compression to the low-order bits. The processing system may reconfigure compression parameters based on residual statistics and codec metadata to dynamically adapt its compression behavior to changing conditions.

The embodiments may enhance the performance and functionality of a spacecraft, network node, or communication system by, for example, improving how the devices allocate radio bandwidth, processor cycles, memory resources, and power. Tile-score-based selection and compression may reduce the data volume traversing a downlink communication channel and support increased coverage or a higher revisit frequency without modifying radio hardware. Embedding-based compression and pixel splitting may reduce memory traffic and storage requirements and lower latency and energy use for each capture-to-downlink cycle. Adaptive codec configuration may maintain compression efficiency as environmental conditions, sensor characteristics, or mission priorities change and support more informed near-real-time decisions at the network edge.

The embodiments address various technical challenges related to excess downlink data volume and on-board energy consumption to reduce bandwidth and energy consumption during compression and transmission for spacecraft and other edge devices. For example, the processing system may generate tile stack scores that incorporate mission data (e.g., cloud thresholds, target parameters, geospatial context, etc.), apply video compression across the spectral bands of selected tile stacks, align the spectral bands geometrically, and perform pixel-splitting operations so that correlated data enters the video encoder in an aligned and ordered form. The processing system may also apply embedding encoder and embedding decoder neural networks to selected tile stacks, generate approximate tile stacks from embedding vectors, and compute residual tile stacks that capture pixel-level differences. These operations may reduce downlink bandwidth usage relative to full-frame lossless transmission, reduce compression energy consumption relative to scalar software compression, and/or decrease memory traffic or processor activity on a spacecraft bus.

The terms "uplink" and "uplinking" may be used herein to refer to the transmission of data, commands, or other information from a local or ground-based device to a remote system, such as a satellite or other spacecraft. In some contexts, terms such as "upload" or "uploading" may be used for readability to describe the same operation. Unless otherwise indicated by the surrounding context, references to "upload" or "uploading" in relation to a spacecraft are intended to have the same meaning as "uplink" or "uplinking" as defined above.

The terms "downlink" and "downlinking" may be used herein to refer to the transmission of data, commands, or other information from a remote system, such as a satellite or other spacecraft, to a local or ground-based device. In some contexts, terms such as "download" or "downloading" may be used for readability to describe the same operation. Unless otherwise indicated by the surrounding context, references to "download" or "downloading" in relation to a spacecraft are intended to have the same meaning as "downlink" or "downlinking" as defined above.

The term "computing device" may be used herein to refer to any of a wide variety of electronic devices capable of executing programmed instructions. These devices include, but are not limited to, server computing devices, personal computers, laptop computers, tablet computers, edge devices, user equipment (UE), multimedia Internet-enabled cellular telephones, smartphones, smart wearable devices (e.g., smartwatches, smart glasses, fitness trackers, smart clothing, jewelry, shoes, etc.), Internet-of-Things (IoT) devices (e.g., smart televisions, smart speakers, smart locks, lighting systems, smart switches, smart doorbell cameras, security systems, smart thermostats, connected appliances, etc.), connected vehicles (e.g., autonomous vehicles, electric vehicles), satellites (e.g., CubeSats, small satellites, etc.), drones, high-altitude platform stations (HAPS), augmented reality (AR) and virtual reality (VR) devices, AI-enabled edge devices, and other similar devices that include memory and a programmable processor to provide the functionality described herein.

The term "processing system" may be used herein to refer to one or more processors, including multi-core processors, that are organized and configured to perform various computing functions. Various embodiment methods may be implemented in one or more of multiple processors within a processing system as described herein.

The term "edge device" (or "edge computing device") may be used herein to refer to a computing device that operates at or near a network edge with limited local resources (e.g., processing power, memory capacity, battery life, and/or bandwidth). Examples of edge devices may include spacecraft, connected vehicles (e.g., trucks, cars, etc.), electric scooters, trains, trams, metros (which may have connectivity for brief periods while in stations), aircraft, drones (land-based, sea-based, or airborne), high-altitude balloons, high-altitude platform stations (HAPS), smartphones, smart wearable devices, Internet of Things (IoT) devices, eMobility devices (e.g., electric scooters, electric bikes), robots, nanobots, or similar computing systems, devices, or objects that include memory, sensors, processors, and communication circuitry for communicating with computing devices at one or more centralized sites. The processor within an edge device may be a programmable processor or a fixed-programmed processor (e.g., a pre-programmed FPGA or ASIC), with associated reconfigurable parameters stored in memory. Edge devices are often resource-constrained, with limited processing power, memory capacity, battery life, and/or bandwidth resources.

The term "spacecraft" may be used herein to refer to a space-based platform such as a satellite (e.g., CubeSats, small satellites, orbiting systems, space-based platforms, etc.) or other vehicles operating in space or near-space that include memory, sensors, processors, and communication circuitry for communicating with one or more centralized sites or ground stations. For ease of reference, some of the embodiments below are discussed with reference to a spacecraft. However, it should be understood that the features described herein for a spacecraft may also be implemented on other edge devices, and descriptions of edge devices are not limited to space-based platforms.

The term "network edge" may be used herein to refer to the point at which data may be processed or analyzed as close as possible to its source or destination, particularly in scenarios in which reducing latency, conserving bandwidth, and enhancing real-time decision-making are particularly important. Processing data at the network edge may reduce the need for extensive data transmission to centralized servers or cloud infrastructure. The specific location of the network edge may vary based on the application, such as being on the device itself in satellite and IoT networks or at the boundary of a local network interfacing with broader networks like the Internet.

The term "extreme network edge" may be used herein to refer to the most remote and resource-constrained points in a network in which data processing and analysis take place, often far removed (physically, logically, and/or in terms of connectivity) from the centralized site/device or centralized computing resources. Examples include, but are not limited to, environments such as low Earth orbit, geosynchronous orbit, deep space, underwater regions, and isolated terrestrial areas, such as deserts or polar regions. Devices operating at the extreme network edge (e.g., satellites, autonomous vehicles, drones, sensor networks, etc.) often face unique and significant challenges due to constraints on processing power, memory, and bandwidth. As a result, devices deployed at the extreme network edge are often highly specialized and configured to perform specific tasks (e.g., data collection and communication, etc.) with limited local resources (e.g., bandwidth, processing, storage, power, etc.) and/or with little or no reliance on, or reliable access to, external infrastructure.

The term "AI edge device" may be used herein to refer to an edge device that is configured to perform AI operations locally on the device and/or to work in conjunction with other devices (e.g., another edge device, centralized site/device, etc.) that perform AI operations. For example, an AI edge device may include an edge AI processor configured to perform "inference" and/or to deploy or utilize a neural network that executes machine learning algorithms locally on the device. As another example, an AI edge device may be configured to collect data on the device, transmit the collected data to a centralized site/device for inference processing to generate an overall inference result, receive the overall inference result from the centralized site/device, and then perform an action based on the received result. In addition, an AI edge device may be part of a group of edge devices (potentially of different types, such as satellites, drones, or IoT devices) that collaborate to achieve federated learning in which each device contributes to a shared model while processing data locally (e.g., to enhance privacy, reduce latency, etc.).

The terms "centralized site" and "centralized device" may be used herein to refer to a control or processing site that includes one or more computing devices configured to initiate, provision, store data on (e.g., collected data, data obtained from other sources, augmented data, etc.), enable labelling on, train, communicate with, and/or control edge devices. A centralized site may be located on Earth or in another environment (e.g., on board a larger spacecraft or in a remote facility) and communicate with edge devices via one or more communication networks.

The term "ground station" may be used herein to refer to a site that includes communication equipment (e.g., radio frequency or optical communication systems) configured to establish a communication link with a spacecraft. In some embodiments, a ground station may host or be coupled to the centralized site. A "Mission Operations Center (MOC)" is an example of a centralized site that may coordinate mission planning, command and control, and data management, and interface with one or more ground stations. In some embodiments, the ground station may be implemented as a computing device that performs some or all of the functions of the centralized site.

The terms "machine learning algorithm" and "AI model" may be used herein to refer to any of a variety of information structures or operations that may be used by a computing device to perform a computation or evaluate a specific condition, feature, factor, dataset, or behavior on a device. Examples of machine learning (ML) algorithms include network models, neural network models, inference models, neuron models, classifiers, random forest models, spiking neural network (SNN) models, convolutional neural network (CNN) models, recurrent neural network (RNN) models, deep neural network (DNN) models, generative network models, ensemble networks, generative adversarial networks, and genetic algorithm models. In some embodiments, a machine learning algorithm may include an architectural definition (e.g., the neural network architecture, etc.) and one or more weights (e.g., neural network weights, etc.).

The term "AI model" may be used herein to refer to a wide variety of information structures that may be used by a computing device to perform a computation or evaluate a specific condition, feature, factor, dataset, or behavior on a device. Examples of AI models include network models, neural network models, inference models, neuron models, classifiers, random forest models, spiking neural network (SNN) models, convolutional neural network (CNN) models, recurrent neural network (RNN) models, deep neural network (DNN) models, generative network models, and genetic algorithm models. In some embodiments, an AI model may include an architectural definition (e.g., the neural network architecture, etc.) and one or more weights (e.g., neural network weights, etc.).

The term "neural network" may be used herein to refer to an interconnected group of processing nodes (or neuron models) that collectively operate as a software application or process that controls a function of a computing device and/or generates an overall inference result as output. Individual nodes in a neural network may attempt to emulate biological neurons by receiving input data, performing simple operations on the input data to generate output data, and passing the output data (also called "activation") to the next node in the network. Each node may be associated with a weight value that defines or governs the relationship between input data and output data. A neural network may learn to perform new tasks over time by adjusting these weight values. In some cases, the overall structure of the neural network and/or the operations of the processing nodes do not change as the neural network learns a task. Rather, learning is accomplished during a "training" process in which the values of the weights in each layer are determined. As an example, the training process may include causing the neural network to process a task for which an expected/desired output is known, comparing the activations generated by the neural network to the expected/desired output, and determining the values of the weights in each layer based on the comparison results. After the training process is complete, the neural network may begin "inference" to process a new task with the determined weights.

The term "inference" may be used herein to refer to a process that is performed at runtime or during the execution of the software application program corresponding to the machine learning algorithm. Inference may include traversing the processing nodes in a network (e.g., neural network, etc.) along a forward path (which may include some backwards traversals) to produce one or more values as an overall activation or overall "inference result". Some embodiments may use inference in live data processing and real-time decision-making to allow edge devices to analyze incoming data locally and generate actionable insights without needing to offload the data to a centralized cloud system. Executing inference on the edge device may reduce latency and bandwidth usage, and decisions may be made closer to the data source, which may be particularly advantageous in resource-constrained or intermittent connectivity environments. The edge device may apply the trained machine learning models to real-time data streams to quickly generate contextually relevant results based on the live data.

The terms "image" and "frame" may be used herein to refer to visual data acquired by a camera device or other imaging sensors. An image may include a multitude of color channels and pixels, as well as additional metadata such as timestamps, geolocation information, and sensor-specific data (e.g., focal length, exposure settings). Some embodiments may include an image or frame that includes data captured across various spectra, including visible light, infrared, multispectral, hyperspectral, and synthetic aperture radar (SAR). This data may be used for a range of applications, including geolocation, object detection, and environmental monitoring.

The term "neural network supervisor" (NNS) may be used herein to refer to a system or software component responsible for monitoring, managing, and enhancing the performance of neural networks in real-time. In some embodiments, the NNS may track the operation of various layers and nodes within the neural network to adjust parameters (e.g., learning rates, weight updates, node activations, etc.) to improve performance. In some embodiments, the NNS may be responsible for handling model updates, anomaly detection, and resource allocation in edge computing environments with limited network resources. In various embodiments, the NNS may operate autonomously or in conjunction with human operators to improve the accuracy and efficiency of machine learning models in production environments.

The term "transmission site" may be used herein to refer to a fixed or mobile facility that includes communication equipment (e.g., radio frequency, optical, or other communication systems) configured to transmit and/or receive data to or from one or more spacecraft or other edge devices. A transmission site may, for example, be a satellite ground station, a relay station, a maritime or airborne platform, or another communication node that participates in establishing a communication link between a spacecraft and a centralized site or ground station. In some embodiments, a transmission site may be co-located with, or logically integrated into, a ground station or centralized site. In other embodiments, a transmission site may operate as a separate relay or downlink site that forwards received data to a centralized site over one or more networks.

The term "Earth observation data" or "EO data" may be used herein to refer to data captured by one or more sensors carried by a spacecraft or other platform for the purpose of observing the Earth, its atmosphere, or other celestial or terrestrial bodies. Earth observation data may include, but is not limited to, image data (e.g., multispectral or hyperspectral imagery, panchromatic imagery, SAR data), associated metadata (e.g., timestamps, geolocation, sensor settings, platform state), and derived data products (e.g., segmentation masks, classification maps, or other intermediate representations) generated from such captured data.

The term "band" or "spectral band" may be used herein to refer to a subset of an electromagnetic spectrum over which an imaging or sensing device measures intensity or other signal values. A band may be characterized, for example, by a center wavelength (e.g., expressed in nanometers) and a bandwidth, and correspond to one channel of a multispectral or hyperspectral image. References to "bands of an image" or "bands of an image stack" herein are intended to encompass any such spectral channels captured by the relevant sensor, including visible, infrared, ultraviolet, or other wavelength ranges.

The term "image stack" may be used herein to refer to a multi-dimensional representation of image data that includes multiple spectral bands or channels associated with a single captured scene or frame. An image stack may be implemented, for example, as a three-dimensional array of pixel values indexed by spatial coordinates (e.g., row and column) and a band index, or as any other data structure that associates multiple bands of pixel data for a common scene. Unless the context indicates otherwise, references to "image stack" herein are intended to encompass both multispectral and hyperspectral image data.

The term "tile" may be used herein to refer to a spatial subset or region of an image or band, such as a rectangular block of pixels defined by a set of row and column indices. Tiling an image or image stack may involve partitioning the spatial extent of one or more bands into multiple tiles to enable local processing, inference, and/or compression on a per-tile basis. A tile may correspond to a single band or to multiple bands, depending on the context.

The term "tile count" may be used herein to refer to a numerical value that represents a quantity of tiles in a defined grouping of tiles. A defined grouping may be a tile stack, a tile stack subset, a global tile stack, a band segment, or a tile sequence provided to a video encoder. In some embodiments, a processing system may calculate a tile count by counting tile descriptors associated with the defined grouping, by counting band indices that have a tile at a common spatial index, or by counting frames submitted to the video encoder for the tile sequence. In some embodiments, the tile count may be compared to a tile count threshold to select an image compression mode or a video compression mode for the defined grouping. In some embodiments, the tile count may be used to control the allocation of buffer space, the selection of a group-of-pictures configuration, the selection of an intra-frame interval, or the selection of a bitrate mode for a video compression action.

The term "tile stack" may be used herein to refer to a collection of tiles that share a common spatial index across multiple bands of an image stack. For example, a tile stack may include the tiles located at a particular tile position for each of a plurality of bands in an image stack. In contrast, the term "band segment" may be used herein to refer to a collection of tiles that share a common band index and lie on a common row, column, or other spatial grouping within that band. Tile stacks and band segments are logical groupings used to describe how an image stack may be partitioned for processing and compression.

The term "tile stack subset" may be used herein to refer to any proper subset of tiles within a tile stack (e.g., a subset of bands, a subset of spatial tiles, a subset selected based on mission parameters or inference results, etc.).

The term "global tile stack" may be used herein to refer to an aggregate collection of tiles or tile stacks associated with a particular image or image stack (e.g., the set of tiles for all tile positions and bands of that image, etc.) organized for processing as a single logical unit (e.g., when treated as a sequence of frames for video compression).

The term "compressed image data file" may be used herein to refer to any data structure, container, or representation that stores one or more compressed versions of an image, image stack, tiles, tile stacks, embeddings, residuals, or combinations thereof. A compressed image data file may include, by way of example, compressed tile stacks produced by an image or video codec, compressed latent space embeddings, compressed residual matrices, associated metadata, and/or ancillary information (e.g., checksums or indicators). It should be understood that references to a "file" do not require any particular on-di sk or on- media format and encompass in-memory buffers, data streams, network payloads, archives (e.g., Zip, 7z), or other logical groupings of data.

The terms "tile stack score" and "tile stack subset score" may be used herein to refer to one or more numerical values derived from processing or inference applied to a tile stack or tile stack subset. In various embodiments, a tile stack score may represent a measure of cloud coverage, a probability that a region includes mission-relevant content, an information content metric, or another mission- specific quality metric. In some embodiments, the tile stack score may quantitatively represent the predicted usefulness of the tile stack for at least one mission objective. Unless otherwise indicated, such a score may be treated as a scalar value that may be compared against one or more thresholds to control subsequent processing or compression decisions. The term "threshold" in this context may refer to a configurable value or set of values used to determine how a tile, tile stack, or tile stack subset is processed (e.g., whether to preserve, discard, or compress at a given quality level) based on the corresponding score.

The term "useful information" may be used herein to refer to image content that is deemed mission-relevant, information- rich, or otherwise of interest for subsequent analysis, such as regions corresponding to land cover, objects, environmental features, or other target phenomena defined for a particular mission. Conversely, terms such as "non-useful region" , "non-useful pixels" , or "low-information portion" may be used herein to refer to portions of a ti le or tile stack that are deemed, based on inference, heuristics, or mission-specific rules, to be of low interest or low information content (e.g., homogenous cloud, open ocean background, large uniform areas, noise, or masked regions). Classification of regions as useful or non-useful may be performed for example, by a segmentation model, a thresholding operation, or other decision logic and be used to guide compression, pixel replacement, or other processing operations discussed herein.

The term "usefulness" may be used herein to refer to a quantified assessment of mission relevance for image content represented by a tile, a tile stack, a tile stack subset, etc. In some embodiments, usefulness may be derived from an inference result produced by a trained artificial intelligence model for the tile, tile stack, tile stack subset, etc.

The term "target tile size" may be used herein to refer to a desired or nominal spatial size (e.g., in pixels) for a tile used for processing, inference, or compression. In some embodiments, the actual tile size may be selected to exceed the target tile size to provide overlap between adjacent tiles.

The term "overlap region" may be used herein to refer to the spatial region in which two or more tiles cover common pixels in the original image or image stack.

The term "overlap width" may be used herein to refer to a measure of the spatial extent of such overlap (e.g., a number of pixels or distance) along one or more edges of a tile. Overlap may be configured, for example, to support alignment transforms, mosaicking, or to reduce boundary artifacts during compression or inference.

The term "mosaicking" may be used herein to refer to a process of reconstructing or reforming an image or image stack from a collection of tiles or tile stacks by arranging them according to their spatial indices or positions. Mosaicking may include resolving any overlap regions between tiles, applying alignment transforms, and combining pixel values to produce a continuous output image or image stack.

The term "overlap rule" may be used herein to refer to any policy, algorithm, or configuration used to resolve overlap regions during mosaicking, such as selecting one tile's pixels, averaging pixels, performing a weighted aggregation, applying voting among overlapping pixels, or applying a static configuration specified by mission parameters.

The term "latent space embedding" may be used herein to refer to a lower-dimensional representati on of a tile, tile stack, or image stack generated by an encoder model (e.g., a neural network) that maps high-dimensional pixel data into a latent space. A latent space embedding may be represented as a vector, tensor, or other data structure that captures salient features of the input data in a compact form suitable for compression, transmission, or downstream processing.

The term "tile stack residual" may be used herein to refer to a set of difference values obtained by comparing an original tile, tile stack, or tile stack subset with a reconstructed or approximate version generated by a decoder or other reconstruction process. For example, a tile stack residual may be computed as a pixel-wise difference between an original image stack tile region and a reconstructed tile region produced by an autoencoder or other model. The term "residual statistics" may be used herein to refer to one or more metrics derived from such residuals, such as residual energy, variance, bit count, error distribution metrics, or other quantitative indicators of reconstruction error.

The term "video compressor metadata" may be used herein to refer to auxiliary information or statistics produced by a video compression process or video codec, such as motion vector statistics, reference frame usage statistics, quantization parameter statistics, entropy coder statistics, bitrate usage, or similar parameters that characterize how an image, tile, or tile stack was encoded.

The term "image compression metadata" may be used herein to refer to metadata associated with compression of one or more images, image stacks, tiles, or tile stacks, and include, for example, residual statistics, video compressor metadata, compressor configuration parameters, and/or other information collected across one or more images to inform subsequent processing or configuration.

The term "compression control algorithm" may be used herein to refer to any algorithm, rule set, or AI model configured to monitor the behavior of a compression process (e.g., image or video compression) and to adjust one or more compression configuration parameters based on observed data. In various embodiments, a compression control algorithm may use residual statistics, video compressor metadata, image compression metadata, mission parameters, or other inputs to select or update parameters such as bitrate mode (e.g., constant or variable), group-of- pictures (GOP) configuration, quantization parameters, intra-frame intervals, or tile- specific quality settings, with the goal of meeting bandwidth, quality, or power constraints.

The term "foundation model" may be used herein to refer to a machine learning or AI model that has been pre-trained on a broad and diverse dataset (e.g., a large corpus of Earth observation data) to learn general-purpose features that may be adapted to a variety of downstream tasks. A foundation model may be used directly, serve as a teacher model for knowledge distillation, or be further fine-tuned on mission-specific data.

The term "knowledge distillation" may be used herein to refer to a training process in which a "student" model is trained using outputs, intermediate representations, or other guidance from a larger or more complex "teacher" model (for example, a foundation model). Knowledge distillation may be used to produce a student model with fewer parameters, reduced memory footprint, or lower computational requirements while approximating the performance of the teacher model, thereby facilitating deployment on resource-constrained spacecraft or other edge devices.

The term "fine- tuning" may be used herein to refer to a process of adapting a pre-trained model (e.g., a foundation model or student model) to a particular task, sensor, or mission by continuing training on a smaller, task-specific dataset. In some embodiments, fine-tuni ng may adjust some or all of the weights of the pre-trai ned model using raw or processed Earth observation data from a target imager or mission (and thus improve performance for that specific operating context while leveraging knowledge learned during the initial pre-training stage ).

Earth observation (EO) data is data captured by an imager on board a satellite. Satellite imagers typically have the capability to acquire very large frames, in the order of tens of megapixels per channel. This is true of both linescan and snapshot Earth observation imaging, although the data volume is often larger for linescan imaging due to the format of the detector array and the ability to capture very 'long' images with such cameras. Further, the number of spectral channels that Earth observation images can capture has significantly increased recently. Multispectral imagers capture multiple spectral bands or channels per image, typically 4 or more channels. This is in contrast to RGB imagers, which are the typical imager types used terrestrially, which only have 3 spectral channels (red, green, blue). There has been a keen interest in flying hyperspectral imagers on Earth observation missions in recent years. Hyperspectral imagers support 10s to 100s of spectral channels, which may be contiguous in the spectrum. A typical contemporary hyperspectral Earth observation sensor may have more than 100 spectral channels available to choose from, although the number that can actually be captured and read out as a single image may be fewer.

With the trend toward higher spectral (and spatial) resolution, the size of Earth observation images captured by satellites has grown significantly. Today, a typical hyperspectral image - or datacube as it is commonly referred to - may be several Gigabytes in size. This may pose a challenge at the downlink stage, where the communications datapipe to the ground has a limited data rate. Since the communications pipe is only active via satellite ground stations, the amount of data that may be downlinked per satellite orbit may be relatively low (depending on the number of ground stations, the capabilities of the radios, the amount of communications contention with other satellites using the same ground station, etc.). Any solution to reduce the size of Earth observation images, in particular hyperspectral images may allow both a reduction in the cost per downlinked image (e.g., by paying for less downlink bandwidth) and an increase in the value derived from the asset during that orbit (e.g., by enabling the capture and downlink of more images).

Earth observation data compression has been addressed with many different approaches. One is to use standard terrestrial compression techniques, another is to use AI encoders and their variants, and yet another is to remove data as a way to achieve compression. In all cases, the power required to perform the compression is a key factor in choosing an approach for the satellite. This is because satellites are severely power-constrained, with the capacity to perform operations on orbit often limited by the available power to perform those operations. Since the sizes of both the solar panels and the battery energy store are finite and increasing either of them implies extra mass (which costs more to launch), the approach is to limit onboard processing power consumption where possible. Therefore, any Earth observation image compression should be power-aware and power-efficient.

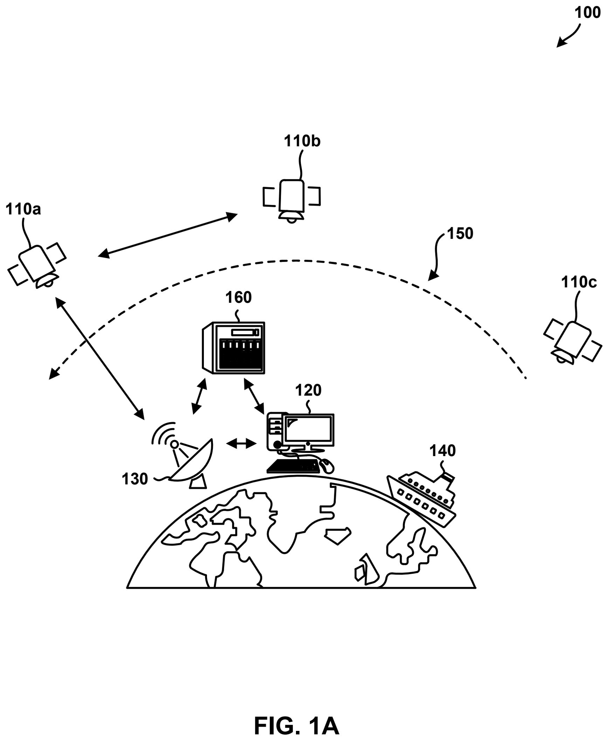

FIG. 1A is a component block diagram illustrating an exemplary embodiment. In the example illustrated in FIG. 1A, the system 100 includes edge devices as satellites in space 110a, 110b, 110c, a centralized site 120, a transmission site 130, a ship 140, and a server 160. Satellites 110a, 110b, and 110c follow the same orbit 150, and satellite 110b is a follow-on satellite relative to satellite 110a. Satellite 110c may be able to take photographs of ship 140, but satellite 110c will not have a downlink capacity sufficient for transmitting photos of ship 140 until satellite 110c is above transmission site 130. Satellites 110a, 110b, and 110c may be capable of transmitting small amounts of information (e.g., textual information, cropped versions of single images) to devices on Earth (e.g., computing devices) while the satellites are in any location.

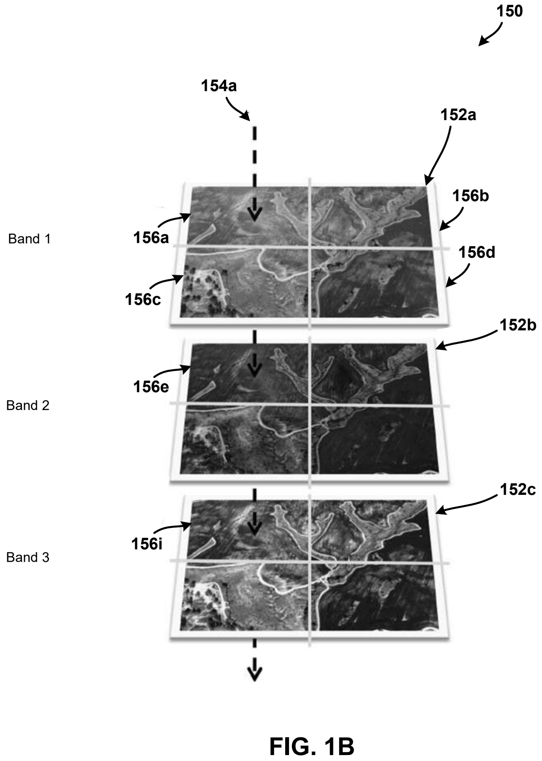

FIG. 1B illustrates an image 150 that includes bands 152a, 152b, 152c and tiles 156a through 1561. Each band 152a, 152b, 152c may correspond to a spectral band with a center wavelength expressed in nanometers (e.g., 465 nm, 470 nm, 475 nm, etc.). A single captured image may include, for example, between 32 and 550 bands based on sensor design and mission configuration. A processing system may partition each band into tiles 156a through 1561, with a fixed tile size or a configured tile size. Tiles that share a band index and lie on a common row or column may form a band segment, such as band 152a that includes tiles 156a through 156d. Tiles that share a spatial index across bands may form a tile stack, such as tile stack 154a that includes tiles 156a, 156e, and 156i. A band may be decomposed into any number of tiles, and each tile position may generate a corresponding tile stack across the available bands.

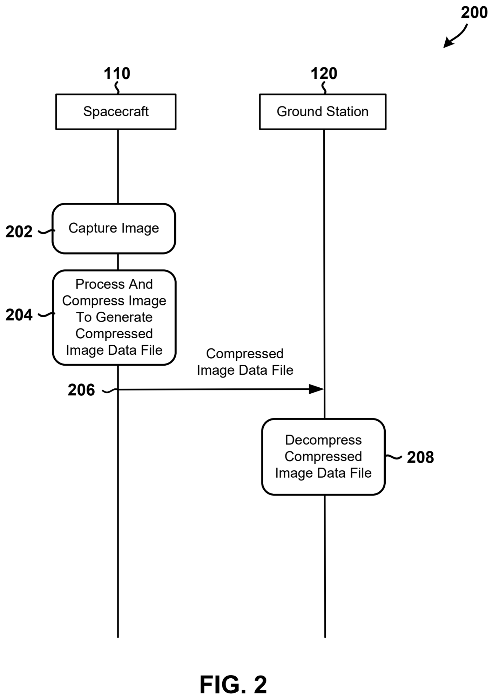

FIG. 2 is an activity diagram illustrating a method 200 of reducing the data volume downlinked from a spacecraft to a ground station in accordance with some embodiments. In operation 202, the spacecraft (e.g., satellites in space 110, etc.) may capture an image using an onboard imager. In operation 204, a processing system on the spacecraft may process and compress the image to generate a compressed image data file. In operation 206, the spacecraft may transmit the compressed image data file to a ground station. In operation 208, a processing system at the ground station may decompress the compressed image data file and reconstruct an image stack for further processing. The system may repeat operations 202 through 208 for each captured image.

Compression algorithms for vision data are varied and well-established. Algorithms from the JPEG family (e.g., JPEG, JPEG-L S, JPEG 2000) may be configured to operate in lossy or, in some variants, lossless modes. In the case of Earth observation imagery, ground pixels (i.e., those that are not cloud-covered) may need to be downlinked lossless, so that the compression algorithm itself does not alter the sensed pixel values. The Consultative Committee for Space Data Systems (CCSDS) standards (e.g., CCSDS 123.0-B-x, etc.) also provide an algorithm for hyperspectral datacube compression.

In various embodiments, the processing system may be configured to apply a lossy or lossless compression process to vision data. The JPEG family of standards (e.g., JPEG, JPEG-L S, JPEG 2000, etc.) define s compression coders with configuration parameters that select between lossy and lossless operation for designated profiles. Earth observation missions may specify lossless compression for ground pixels with no cloud cover, ensuring that decompression reproduces the imager's output pixel values for quantitative analysis. The CCSDS publishes standards for space mission data compression. CCSDS 123.0-B specifies a compression process for multispectral and hyperspectral datacube data.

The various embodiments described herein address on-satellite compression for Earth observation images, where power efficiency is very important, and multiple compression approaches may be applied in sequence.

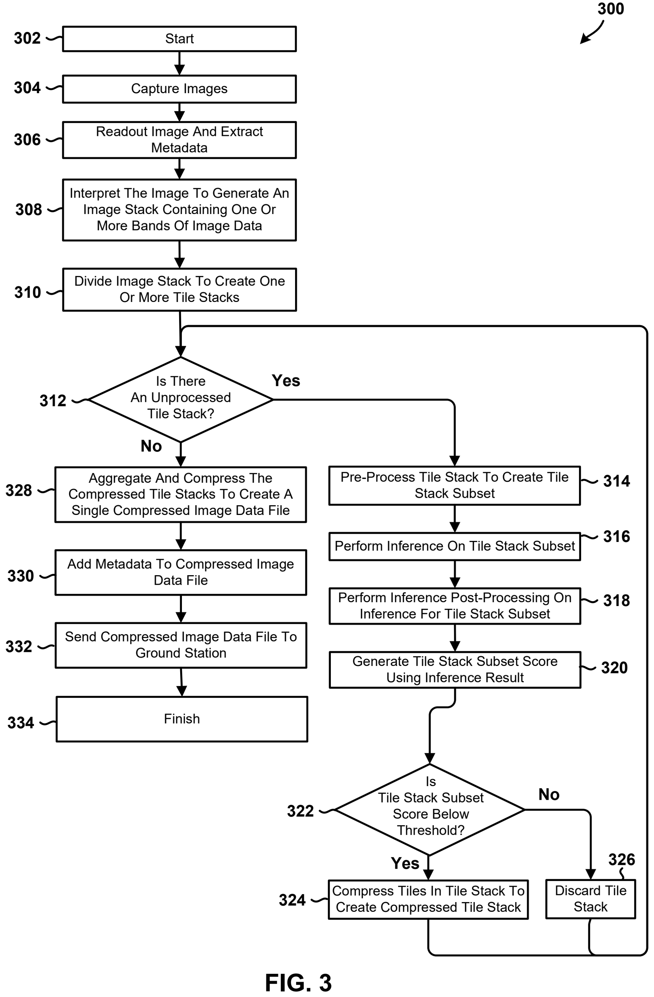

FIG. 3 is a process flow diagram illustrating a first compression method 300 of reducing the data volume downlinked from a spacecraft to a ground station in accordance with some embodiments. Method 300 may be performed by a processor that is part of a spacecraft (e.g., as part of operations 202-206 with reference to FIG. 2). Method 300 utilizes image and video compression techniques. For example, the processor may execute program instructions stored in non-transitory memory that call software or hardware codec modules implementing lossless and lossy image compression algorithms and video compression algorithms, and route tile stacks through those modules based on configuration registers and tile scores.

The process may start in block 302. For example, the processor may set a start flag in a control register of a compression controller, initialize internal state variables for tile indexing and tile scores, and clear temporary buffers in memory.

In block 304, the processor may cause the spacecraft to capture an image using at least one sensor. For example, the processor may write configuration values to sensor control registers that set various parameters (e.g., exposure time, gain, region of interest, spectral band selection), assert a capture signal on the sensor interface bus, and wait for a frame-ready interrupt signal from the sensor.

In block 306, the processor may read out the image from at least one sensor. As part of these operations, the processor may extract metadata (e.g., camera or sensor settings, etc.) from the image. For example, the processor may read pixel values and line synchronization codes from a high-speed serial interface, store the pixel values in a frame buffer, and parse header fields or sideband registers that encode various values (e.g., exposure time, gain, sensor temperature, pointing information, etc.). In another example, the processor may instruct a direct memory access (DMA) engine to transfer image data from a sensor interface to memory without continuous processor intervention and then read a separate metadata block produced by the sensor interface hub.

In block 308, the processor may interpret the image to generate an image stack containing one or more bands of image data. The number of bands may be specified via a user configuration or a mission parameter. This specification may also include the specific band numbers or frequencies to compress. Unselected bands may be discarded.

For example, in block 308, the processor may demultiplex interleaved spectral data from a hyperspectral line scanner, write each band to a separate plane in memory, and consult a band-selection table stored in configuration memory to determine which band indices remain in the image stack. In another example, the processor may convert raw digital numbers into radiometrically corrected values using calibration coefficients and map selected frequency channels into band indices that form the image stack.

In some embodiments, the operations in block 308 may include image processing to correct one or more aberrations in raw Earth observation images (e.g., band misalignment, bias, jitter, etc.). For example, the processor may subtract per-band bias offsets from pixel values, apply a dark-frame subtraction routine, and perform line-by-line registration to align bands using integer or sub-pixel shifts computed from star-tracker data or image correlation. In some embodiments, the processor may apply a smoothing filter or de-striping filter to reduce column noise and/or apply a geometric transform to correct for platform jitter using attitude data from an inertial measurement unit.

In some embodiments, the operations in block 308 may include splitting the pixel data into multiple parts, per pixel. For example, for n bit input image pixels (i.e., the pixels have a bit depth of n) each pixel may be split into two parts: one part with p bits and one part with q bits, where p+q=n. The remaining blocks may be applied to only one of these parts, with the other part accumulated in the last step, or it may be applied to both parts separately. The processing system may perform these operations to meet the requirements of the compression engine being used in the later compression block.

In some embodiments, the processor may implement pixel splitting in block 308 by applying a bit mask and a right-shift operation in integer arithmetic, so that the p most significant bits form a first image and the q least significant bits form a second image, stored in separate buffers. In some embodiments, the processor may select p and q based on a configuration profile that depends on the sensor bit depth and the desired radiometric fidelity. In some embodiments, the processor may be configured to use a ground command to update these values and balance trade-offs between compression ratio and quantization error.

In block 310, the processor may divide the image stack to create one or more tile stacks. For example, the processor may iterate over the image stack in two-dimensional strides of size Tx by Ty pixels and copy pixel subarrays into tile buffers, with each tile buffer including corresponding regions from each band so that each tile buffer forms a tile stack. Alternatively, the processor may maintain tile stacks as views into the image stack without physical copying by storing tile descriptors that include band indices, starting coordinates, dimensions, etc. If there is only one tile stack, the image stack may be the same as the tile stack. In some embodiments, the processor may set a tile size that exceeds a target tile size to provide an overlap region between adjacent tiles. The processor may set an overlap width via one or more mission parameters that depend on, for example, imager parameters, spacecraft parameters, and mission-specific parameters. The processor may store the overlap width in metadata in block 330.

In determination block 312, the processor may determine whether there is an unprocessed tile stack. In response to determining that there is an unprocessed tile stack (i.e., determination block 312 = "Yes"), the processor may select the next unprocessed tile stack and pre-process it in block 314. For example, the processor may maintain a loop index or a queue of tile descriptors, test a status flag associated with each tile stack that indicates whether the tile stack has passed through compression, and pick the next tile stack with a non-processed status. In some embodiments, the pre-processing in block 314 may include discarding some tiles in order to create a tile stack subset. In some embodiments, the pre-processing in block 314 may include tile pre-processing operations such as tile normalization, tile resizing, etc. For example, the processor may compute per-band mean and standard deviation for a tile stack and apply linear normalization to map pixel values into a fixed dynamic range expected by an AI model. As another example, the processor may resize tiles to a fixed width and height using bilinear interpolation so that tiles match the input size of the AI model or the block size of a compression engine, and discard tiles that fall outside a region of interest defined by geolocation constraints.

In block 316, the processor may perform inference on the tile stack or the tile stack subset. In some embodiments, in block 316, the processor may use an AI model to identify features of interest in the tile. For example, the processor may load convolutional neural network weights from non-volatile memory into an AI accelerator, format the tile stack as a tensor with dimensions corresponding to height, width, and bands, and execute a forward pass that outputs class probabilities, bounding boxes, or segmentation masks. In some embodiments, the AI model may use one or a multitude of channels or bands from the input image. In various embodiments, the AI model may be a classification model, a detection model, a segmentation model, or another type of model, such as a regression model or a transformer.

In some embodiments, the model may perform cloud segmentation and assessment to quantify the extent of cloud within a tile. For example, the model may output a binary or multi-class mask in which each pixel carries a cloud or non-cloud label and compute a cloud fraction by dividing the number of cloud-labelled pixels by the total number of pixels in the tile.

In block 318, the processor may perform inference post-processing on the inference result for the tile stack or the tile stack subset. For example, the processor may apply non-maximum suppression to detection boxes, convert segmentation outputs into region-level features such as area and shape descriptors, and aggregate per-band responses into a single feature vector per tile stack. In another example, the processor may map model outputs into mission-specific features such as "ship present", "urban area", or "vegetation index above threshold" by applying rule-based logic or a secondary lightweight classifier.

In block 320, the processor may generate a tile stack or tile stack subset score using the inference result (e.g., based on the percentage of cloudiness determined in block 316). For example, the processor may also apply a lookup table or a small neural network that maps inference features to a scalar score between 0 and 1, where higher scores indicate greater mission value for that tile stack. As another example, the processor may compute a tile score as a weighted sum of feature values (e.g., cloud fraction, target detection confidence, area-of-interest overlap, etc.), with the weights derived from mission parameters stored in configuration memory.

In determination block 322, the processor may determine whether the tile stack or tile stack subset score is below a threshold (e.g., the cloudiness percentage of the tile stack or tile stack subset may be compared against a user-configured threshold). For example, the processor may compare the tile score against a threshold stored in memory or a configuration variable to determine whether the score is below the threshold.

In response to determining that the tile stack or tile stack subset score is below a threshold (i.e., determination block 322 = "Yes"), the processor may compress the tiles in the tile stack to create a compressed tile stack in block 324. For example, the processor may pass the tile stack buffer address and dimensions to a compression library function or a hardware compression engine via a command interface, specify a lossless mode flag, and receive a compressed bitstream that the processor stores in an output buffer.

The tile compression in block 324 may be a compression method that is capable of providing lossy compression or lossless operation. For example, the processor may configure an image codec to operate in a lossless mode that preserves pixel values, such as a predictive coding scheme with entropy coding and without quantization. Alternatively, the processor may select among different lossless codecs (e.g., a CCSDS compressor, a JPEG-LS compressor, etc.) based on a codec identifier stored in the mission configuration, so that different missions share the same framework with different codecs.

In some embodiments, the tile compression in block 324 may be based on a JPEG-family algorithm that supports lossless operation (e.g., JPEG- L S or another lossless profile). In some embodiments, this JPEG compression may be implemented by a hardware acceleration block in a SOC, FPGA, GPU, CPU, etc. For example, the processor may write tile dimensions, stride, and mode flags into memory-mapped registers of a JPEG-LS hardware core, start the core by asserting a control bit, and poll a status register or receive an interrupt when the core has finished encoding the tile stack.

In response to determining that the tile stack or tile stack subset score is not below a threshold (i.e., determination block 322 = "No"), the processor may discard the tile stack in block 326. For example, the processor may update a status flag for the tile stack to indicate a discarded state, mark the corresponding tile buffer as free in a memory allocation table, and omit the tile stack from subsequent aggregation in block 328.

In response to determining that there is not an unprocessed tile stack (i.e., determination block 312 = "No"), the processor may aggregate the compressed tile stacks to create a single compressed image data file in block 328. The aggregation may include compressing all compressed tile stacks (e.g., all compressed tile stacks may be included in a single Zip or 7z file).

In block 330, the processor may add metadata to the compressed image data file. The metadata may include the metadata extracted by the processor in block 306. In some embodiments, the metadata may include band selection parameters and pixel split parameters. In some embodiments, the metadata may include a band order for a video compression frame sequence. In some embodiments, the metadata may include alignment transform parameters for band alignment prior to video compression.

In block 332, the processor may send the compressed image data file to the ground station (e.g., using a narrowband radio frequency link). The process may exit, end, terminate, or finish in block 334.

It should be understood that any or all of blocks 302-334 may be optional, performed in series or parallel, and performed in a different order in the various embodiments.

In some embodiments, instead of discarding tile stacks that have a tile stack or tile stack subset score that is not below the threshold (e.g., block 326), those tile stacks may be compressed using lossy compression. In an enhanced embodiment, the quality of the lossy compression may be set according to a function of the tile stack or tile stack subset score. This function may be an affine function of the tile stack or tile stack subset score, or it may be determined as a function of the inference result, threshold, or the AI model confidence.

In some embodiments, the tile inference network used in block 316 may be a segmentation network, and the tile compression in block 324 may preserve original pixel values only for those portions of the tile that are segmented as containing useful information. This may be achieved by setting all pixels that are segmented as non-useful (e.g., with a segmentation score below a threshold) to a constant value prior to compression. In an enhanced embodiment, the tile compression in block 324 may apply lossy compression to portions of the tile that are segmented as non-useful regions.

In some embodiments, the tile compression in block 324 may utilize a video compression method (e.g., H.264 or H.265 video compression algorithms). The video compression may be applied to the tiles in the stack by treating the tiles as an image sequence or video. This may allow the video compressor to identify correlations between adjacent bands and thereby achieve high-efficiency inter-band compression. In an enhanced embodiment, the tiles may be ordered prior to video compression such that the center wavelengths of the bands in the tiles are either monotonically increasing or monotonically decreasing.

In some embodiments, the processor may preprocess the tiles in the tile stack prior to video compression to reduce band misalignment across bands in the tile stack. Band alignment may include the alignment of tiles across bands to a common reference tile. This pre-processing may increase inter-band correlation and increase the video compression ratio. The processor may select a reference tile in the tile stack. The reference tile may correspond to a reference band. The processor may determine an alignment transform for each non-reference tile in the tile stack. The processor may assign an identity transform to the reference tile. An identity transform may map each coordinate to the same coordinate. The processor may apply the alignment transform for each non-reference tile to generate an aligned tile stack. The processor may provide the aligned tile stack to the video compressor as the frame sequence.

In some embodiments, the alignment transform may include a Euclidean, similarity, affine, or perspective transform. A Euclidean transform may represent rotation and translation. A similarity transform may represent rotation, translation, and uniform scale. An affine transform may be represented as a linear transform and a translation. A perspective transform may represent a projective transform. The processor may determine alignment transform parameters via approximate alignment or via exact alignment.

In some embodiments, the processor may store the alignment transform parameters in the metadata in block 330. The metadata may identify the reference band, specify a transform type for each tile, and specify transform parameters for each tile. The transform parameters may be represented as a matrix. The matrix representation may include a 2 by 3 matrix for a Euclidean transform or a similarity transform or an affine transform. The matrix representation may include a 3 by 3 matrix for a perspective transform.

In some embodiments, the ground station processor may read the alignment transform parameters from the metadata in the compressed image data file. The ground station processor may apply an inverse alignment transform to each tile that corresponds to a band in the tile stack after tile decompression. The ground station processor may apply the inverse alignment transform after block 716 or after block 718 and prior to block 732, which are discussed on more detail further below. This inverse alignment transform may restore band geometry for the decompressed tile stack. The inverse alignment transform may reintroduce band misalignment that corresponds to the captured image.

In some embodiments, the processor may apply the alignment transform with a tile size that provides an overlap region between adjacent tiles. The overlap region may support alignment transforms with translation or rotation, or scale, without loss of pixel coverage for a target tile region. The processor may set an overlap width via one or more mission parameters that depend on imager parameters, spacecraft parameters, and mission-specific parameters. The processor may store the overlap width in the metadata in block 330. In some embodiments, the ground station processor may resolve overlap regions during mosaicking in block 732. The ground station processor may apply an overlap rule that uses aggregation or voting or static configuration.

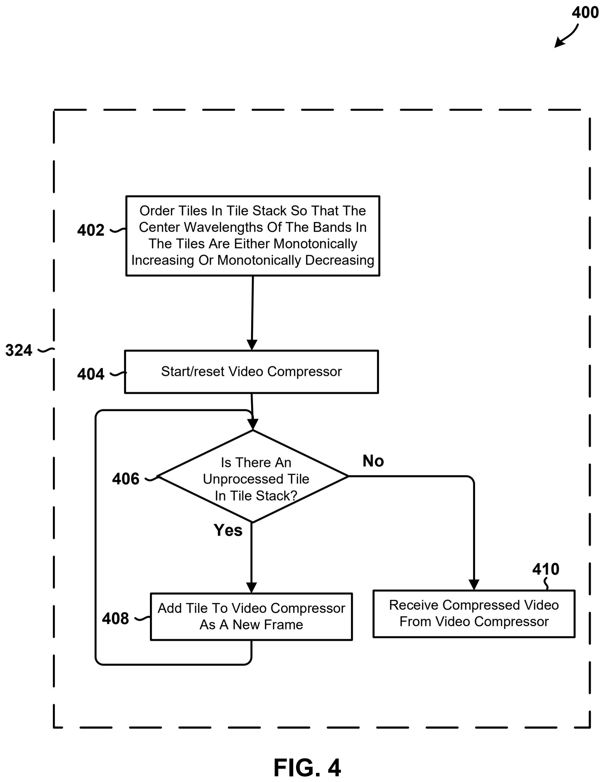

FIG. 4 is a process flow diagram illustrating a video compression method 400 that could be used within block 324 with reference to FIG. 3 in some embodiments. In some embodiments, the video compression blocks may be implemented by a hardware acceleration block in a SOC or on FPGA.

In block 402, the processor may order the tiles in the tile stack so that the center wavelengths of the bands in the tiles are either monotonically increasing or monotonically decreasing.

In some embodiments, after block 402 and prior to block 404, the processor may perform band alignment for the tile stack. The processor may select a reference tile in the tile stack and determine an alignment transform for each non-reference tile. The processor may assign an identity transform to the reference tile. The processor may apply the alignment transform for each non-reference tile to generate an aligned tile stack for the video compressor. The processor may store the alignment transform parameters in metadata in block 330.

In block 404, the processor may start, initialize, reset or otherwise prepare a video compressor for performing video compression.

In determination block 406, the processor may determine whether there is an unprocessed tile in the tile stack. In response to determining that there is an unprocessed tile in the tile stack (i.e., determination block 406 = "Yes"), the processor may add the tile to the video compressor as a new frame in block 408.

In response to determining that there is not an unprocessed tile in the tile stack (i.e., determination block 406 = "No"), the processor may receive or retrieve the compressed video from the video compressor in block 410.

In an alternative embodiment, the compression in block 328 may utilize a video compression method (e.g., H.264 or H.265 video compression algorithms).

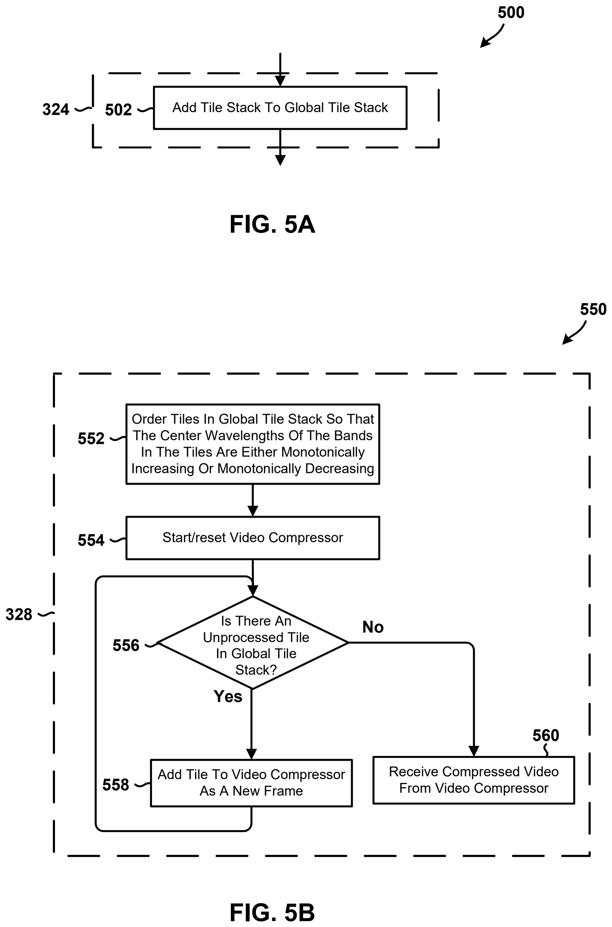

FIGs. 5A and 5B are process flow diagrams illustrating a video compression method 500, 550 that could be used within blocks 324 and 328 with reference to FIG. 3 in some embodiments. In some embodiments, the video compression blocks may be implemented by a hardware acceleration block in a SOC or on FPGA.

In block 502, the processor may add the tile stack to a global tile stack that is specific to the current image (e.g., captured in block 304 with reference to FIG. 3). In block 552, the processor may order the tiles in the global tile stack so that the center wavelengths of the bands in the tiles are either monotonically increasing or monotonically decreasing.

In some embodiments, after block 552 and prior to block 554, the processor may perform band alignment for the global tile stack. The processor may select a reference tile and determine an alignment transform for each non-reference tile in the global tile stack. The processor may assign an identity transform to the reference tile. The processor may apply the alignment transform for each non-reference tile to generate an aligned global tile stack for the video compressor. The processor may store the alignment transform parameters in metadata in block 330.

In block 554, the processor may start, initialize, reset, or otherwise prepare a video compressor for performing video compression. In determination block 556, the processor may determine whether an unprocessed tile remains in the global tile stack. In response to determining that an unprocessed tile remains (i.e., determination block 556 = "Yes"), the processor may provide the unprocessed tile to an input of the video compressor as a frame in block 558. The video compressor may place the frame in a frame buffer for later encoding.

In response to determining that an unprocessed tile does not remain in the global tile stack (i.e., determination block 556 = "No"), the processor may cause the video compressor to execute the encode operation across the set of frames in the frame buffer, and the processor may receive or retrieve a compressed video bitstream in block 560. In this embodiment, block 558 may provide frame submission, and block 560 may provide compressed video output for the global tile stack as a unit. The video compressor may defer the generation of the compressed video bitstream until block 560.

In some embodiments, the video compressor may be applied to the full image, or a portion thereof, with the discarded tiles or bands set to a fixed value (e.g., 0, black). In some embodiments, the video compressor may be configured (e.g., as part of blocks 404 and 554) to use a quality parameter (e.g., an implementation-specific 0-100 scale where higher values approximate a lossless mode). In some embodiments, values below the maximum quality value may be used for lossy compression. In an enhanced embodiment, the lossy quality score may only be used to compress the tile stacks or tile stack subsets whose scores are not below the threshold (e.g., in block 326 with reference to FIG. 3).

In some embodiments, the processor may set one or more video compressor configuration parameters as part of block 404 or block 554. The video compressor configuration parameters may include a lossy quality parameter. In an enhanced embodiment, the processor may apply the lossy quality parameter for tile stacks selected for lossy compression (e.g., tiles or tile stacks that correspond to determination block 322 = "No" in embodiments that substitute lossy compression for block 326).

In an enhanced embodiment, the processor may apply a compression control algorithm during the compression of tile stacks with the video compressor. The compression control algorithm may obtain residual information from the video compressor for a tile stack and the compression control algorithm may update one or more video compressor configuration parameters prior to compression of a subsequent tile stack. The residual information may include residual statistics. The residual statistics may include a residual energy metric or a residual bit count metric. The compression control algorithm may obtain video compressor metadata for the tile stack. The video compressor metadata may include a motion vector statistic or a reference frame statistic or a quantization parameter statistic or an entropy coder statistic.

In an enhanced embodiment, the video compressor configuration parameters updated by the compression control algorithm may include a group of pictures (GOP) configuration or a bitrate mode selection. As used herein a GOP configuration refers to a pattern that includes an intra coded frame and one or more predicted frames. As used herein an intra coded frame refers to an I frame and a predicted frame refers to a P frame or a B frame. As used herein a constant bit rate (CBR) mode refers to a bitrate control mode that targets a bounded output rate and a variable bit rate (VBR) mode refers to a bitrate control mode that permits output rate variation based on image content.

In some embodiments, the compression control algorithm may select a GOP length or an I frame interval or a bitrate mode based on residual statistics and video compressor metadata from one or more earlier tile stacks for the image. The processor may apply the selected video compressor configuration parameters for a later tile stack for the image.

In some embodiments, the compression control algorithm may include an AI model. The AI model may receive input derived from residual statistics and video compressor metadata and the AI model may output updated video compressor configuration parameters (e.g., for use in block 404 or block 554).

In another embodiment, the processor may apply the compression control algorithm on an image basis. The processor may store residual statistics and video compressor metadata for a first image as image compression metadata. The processor may use the image compression metadata for the first image to set video compressor configuration parameters for a second image.

In some embodiments, method 300 may use a combination of image and video compression, where the image compression is applied when the number of tiles in the tile stack or tile stack subset is less than or equal to a specified threshold, and the video compression is applied when the number of tiles in the tile stack or tile stack subset is greater than the specified threshold. In an enhanced embodiment, the type of image compression may be selected when the bands of the tiles to be compressed spectrally differ by a wavelength greater than a configured wavelength.

In some embodiments, the low information portions of segmented tiles may be set to some specified constant value (e.g., 0, black) and the video compressor may losslessly compress the modified tile stack. In some embodiments, the overall process may be lossy with respect to the original image, while the video codec itself operates in a lossless mode on the pre-processed data.

In some embodiments, where the pixel data is split into multiple parts (e.g., as part of block 308 with reference to FIG.3), the upper p bits may be compressed separately from the lower q bits, including cases in which this compression is not fully lossless. In an enhanced embodiment, an additional algorithm may be applied for correcting for low ULP (Unit in the Last Place) errors introduced by the encoder. This algorithm operates on the output of the decoder. It fits an r^{th} order 2D or 3D polynomial to the reconstructed (n deep) pixels, in order to allow m ULPs of the p bits to be corrected through a smoothness constraint. In an enhanced embodiment, the p bit image and q bit image may be separately compressed using the techniques described above. In an enhanced embodiment, the p bit image may be padded with values (e.g., 0) for the lower q bits, prior to performing compression. In an enhanced embodiment, the upper p bits per pixel may be retained and padded with values (e.g., 0) for the lower q bits, prior to performing lossy compression. Thus, the loss in the lossy compression is constrained to the lower q bits.

In some embodiments, the resulting compressed video may be decompressed on the spacecraft, and the residuals between the input and the decompressed frames may be calculated and subsequently concatenated to the compressed image data file (e.g., as part of block 330 with reference to FIG. 3). In an enhanced embodiment, the system may implement a rule-based or an AI algorithm that monitors compression metadata and the compressor residuals over time and dynamically updates the configuration of the video compressor in order to reduce the magnitude and/or variance of the residuals. For example, the algorithm may adapt one or more of a group of picture configurations, quantization parameters, constant-bitrate versus variable-bitrate settings, or other codec-specific parameters. As such, in some embodiments, the compressor settings for later tile stacks may be enhanced based on compressor metadata and residual statistics gathered from earlier tile stacks. In some embodiments, a similar adaptive configuration scheme may operate on an image basis, in which analysis of compression metadata and residuals from a first compressed image may be used to update the compressor configuration applied to subsequent image compression.

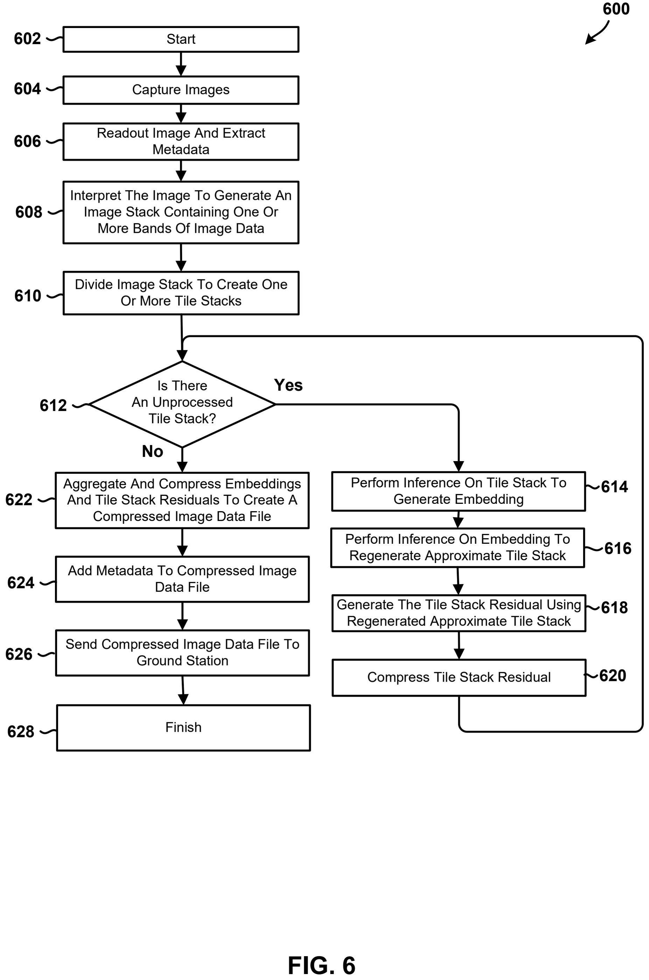

FIG. 6 is a process flow diagram illustrating a second compression method 600 of reducing the data volume downlinked from a spacecraft to a ground station in accordance with some embodiments. Method 600 may be performed by a processor that is part of a spacecraft (e.g., as part of operations 202-206 with reference to FIG. 2).

Method 600 may apply an AI model to generate a latent space embedding of a tile or tile stack (herein, either "tile" or "tile stack" for ease of reference). The latent space embedding may be a reduced-dimensional vector representation of the tile stack content. The latent space embedding may correspond to a single band in the tile stack or to multiple bands.

A developer may train the AI model with a large Earth observation dataset. The dataset may include raw or processed Earth observation data. The developer may apply transfer learning with a limited set of raw Earth observation data when the dataset includes processed Earth observation data. The developer may perform training on general Earth observation imagery or on a target mission. Data for the target mission may include real mission data or simulated mission data.

In some embodiments, the AI model may correspond to a foundation model, a model that a developer pre-trains on a broad Earth observation dataset for general-purpose feature extraction. The broad Earth observation dataset may include data from image sensors distinct from a target imager. In some embodiments, the processor may use an encoder model derived by a developer from the foundation model via knowledge distillation, a training process that sets the weights of a student model based on the outputs of a teacher model. The student model may have a smaller parameter count than the teacher model. Knowledge distillation may reduce encoder model size and support deployment on on-board and edge processing hardware. In some embodiments, the developer may fine-tune the foundation model using real mission data or simulated mission data from the target imager and target mission. As used herein, fine-tuning refers to the adjustment of a pre-trained model's weights using task-specific data. Fine-tuning may adjust the encoder weights to match the target imager response.

In some embodiments, the AI model may correspond to an encoder of an autoencoder model. The autoencoder model may include a decoder. The processor may execute the decoder on the embedding to generate an approximate tile stack. The processor may subtract the approximate tile stack from an original tile stack to generate residual values. The residual values may be compressed with a classical compression method.

Method 600 may use embeddings and tile stack residual compression techniques. For example, the processor may treat embeddings as a low-rate stream that describes global or regional structure, treat tile stack residuals as a higher-rate stream that refines local details, compress each stream with a different codec or quality level, and aggregate the streams into a single container for downlink.

In blocks 602-612, the processor may perform the same or similar operations as those described with reference to blocks 302-312 of FIG. 3. For example, the process may start in block 602. In block 604, the processor may cause the spacecraft to capture an image using at least one sensor. In block 606, the processor may read out the image from at least one sensor. The processor may also extract metadata (e.g., camera or sensor settings) from the image. In some embodiments, the processor may obtain additional metadata (e.g., spacecraft attitude, ephemeris, and pointing data) from separate subsystems and associate it with the image using a common time tag.

In block 608, the processor may interpret the image to generate an image stack containing one or more bands of image data. The number of bands may be specified via a user configuration or a mission parameter. This specification may also include the specific band numbers or frequencies to compress. Unselected bands may be discarded. Block 608 may also include image processing to correct some or all of the aberrations associated with raw Earth observation images (e.g., band misalignment, bias, jitter effects, etc.).

In block 610, the processor may divide the image stack to create one or more tile stacks. If the number of tile stacks is one, then the image stack is the same as the tile stack. In determination block 612, the processor may determine whether there is an unprocessed tile stack. In response to determining that there is an unprocessed tile stack (i.e., determination block 612 = "Yes"), the processor may perform inference on the tile stack in order to generate an embedding in block 614. In alternative embodiments, the processor may perform inference on one or more individual tiles that form a tile stack subset.

In block 616, the processor may perform inference on the embedding by running the decoder (an inference with a neural network) to regenerate the approximate tile stack, the approximate tile stack subset, or individual tiles. For example, the processor may read the embedding vector from memory, pass it through a decoder neural network that includes transposed convolution or upsampling layers, and write the resulting approximate pixel values into a buffer with the same spatial and spectral dimensions as the original tile stack.

In block 618, the processor may generate the tile stack residual using the regenerated approximate tile stack or tile stack subset by comparing the approximate tile stack, approximate tile stack subset, or approximate tile to the original tile stack, original tile stack subset, or original tile. The tile stack residual or tile may be a matrix of residuals. For example, in block 618, the processor may iterate over each pixel location in the tile stack, subtract the approximate value from the original value in integer arithmetic, and store the difference in a residual buffer with the same layout as the original tile stack. In some embodiments, the processor may compute residuals only for selected bands or regions of interest, set residuals to zero outside those regions to increase compressibility, and record a mask or region descriptor in metadata so that decompression logic reconstructs the full tile stack correctly.

In block 620, the processor may compress the tile stack residual. For example, the processor may pass the residual buffer to a lossless entropy encoder, apply a predictive filter across pixels to reduce entropy, and write the compressed residual bitstream to an output buffer.

In response to determining that there is not an unprocessed tile stack (i.e., determination block 612 = "No"), the processor may aggregate and compress embeddings and tile stack residuals to create a compressed image data file in block 622.

In blocks 624-628, the processor may perform the same to similar operations discussed above with reference to blocks 330-334. For example, in block 624, the processor may add metadata (e.g., including the metadata that was obtained in block 606 or described above with reference to block 330) to the compressed image data file. In block 626, the processor may send the compressed image data file to the ground station (e.g., using a narrowband radio frequency link). The process may exit, end, terminate, or finish in block 628. One or more of blocks 602-628 may be optional, performed in series or parallel, and performed in a different order in the various embodiments.

In an alternative embodiment, method 600 may calculate the latent space embedding per image instead of per tile stack. For example, the processor may flatten or pool features across all tiles in an image stack into a single large input tensor, pass that tensor through the encoder model, and obtain one embedding vector that represents the full image.

In an alternative embodiment, method 600 may calculate the latent space embedding once for all bands in the tile stack. In an enhanced embodiment, method 600 may calculate the latent space embedding across all bands in the image at once (i.e., on the tiles of combined bands). For example, the processor may treat the band dimension as a channel dimension in the encoder input tensor so that the encoder model observes spectral relationships across bands directly, and use three-dimensional convolutions or attention mechanisms that span spatial and spectral axes.

In some embodiments, method 600 may use a foundation model, or a model that is trained based on a foundation model (e.g., using knowledge distillation). For example, the processor may load weight files for a distilled foundation encoder that a developer trained on a broad Earth observation corpus and apply that encoder to tiles from different missions without retraining (e.g., by relying on fine-tuning performed offboard). In another example, the processor may store version identifiers for the foundation-based encoder in metadata so that a ground system may apply compatible decoders and update the encoder version over time through uplinked model packages.

In some embodiments, method 600 may perform band alignment, either per tile, per tile stack, or per image, prior to performing embedding extraction. The calculated alignment parameters may be included in the final compressed image data file. By first aligning the bands, the inter-imager variability may be reduced, allowing a more generic Earth observation embedding network to be trained and used. In other words, the network may focus its predictive ability on the inter-band properties of Earth observation images, rather than having to also capture the inter-imager variability (which is considerably more difficult).

In some embodiments, method 600 may cause the image interpretation to optionally reorder the bands so that the AI model always sees the same bands, or the same monotonically increasing band wavelengths in the same order. For example, the processor may maintain a lookup table that maps physical wavelengths or sensor channel identifiers to encoder band indices, sort bands by center wavelength, and reorder band planes in memory or in index order before constructing encoder input tensors. In some embodiments, the processor may insert dummy bands or zero-filled channels when certain wavelengths remain absent from a particular sensor so that the encoder receives a fixed number of channels in a consistent order across different missions or sensor configurations.

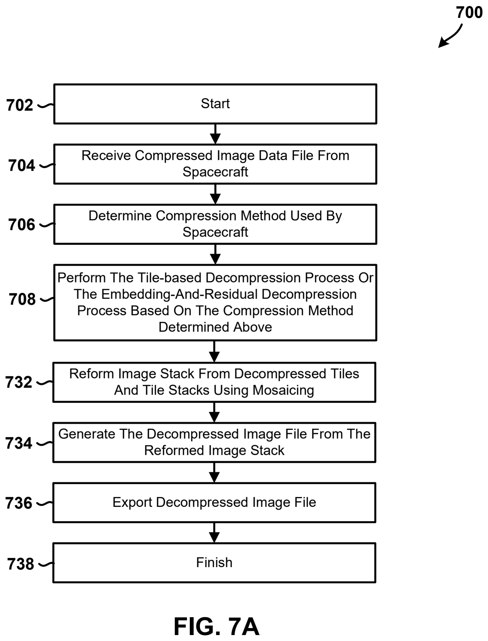

FIGs. 7A-7C are process flow diagrams illustrating a decompression method 700 for use with the compression methods of reducing the data volume downlinked from a spacecraft to a ground station in accordance with some embodiments. Method 700 may be performed by a processor that is part of a ground station (e.g., as part of operations 208 with reference to FIG. 2).

With reference to FIG. 7A, in block 702, the process may start, and the processor may, for example, perform various initialization operations such as allocating working buffers in memory, initializing indices and status flags that track tile stacks and embeddings, and reading configuration parameters such as supported codecs and model identifiers from a configuration file or database.

In block 704, the processor may receive a compressed image data file from a spacecraft (e.g., resulting from block 332 with reference to FIG. 3 or resulting from block 626 with reference to FIG. 6).

In determination block 706, the processor may determine the compression method used by the spacecraft (e.g., image and video compression method 300, embeddings and tile stack residuals compression method 600).

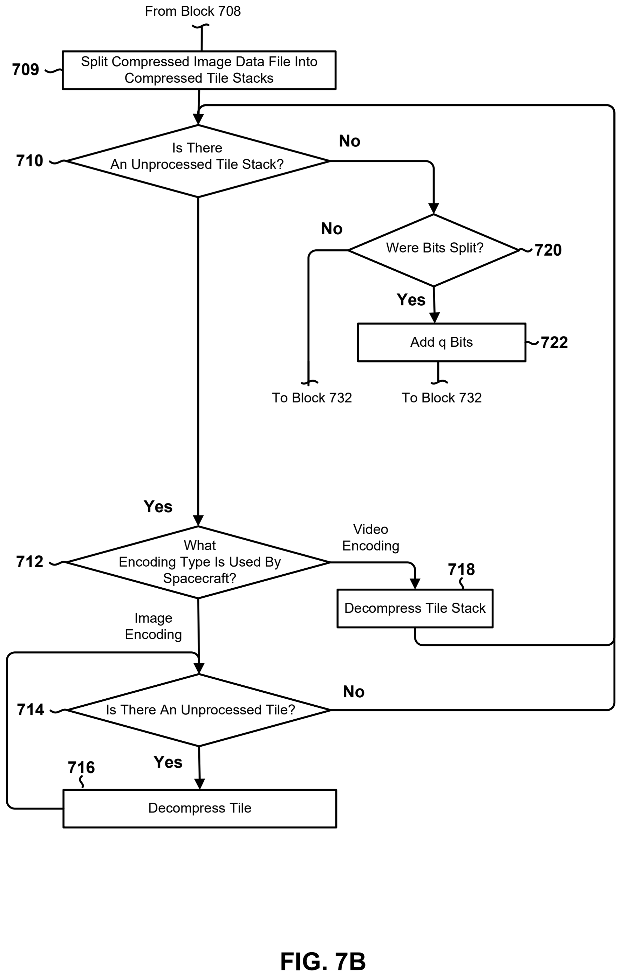

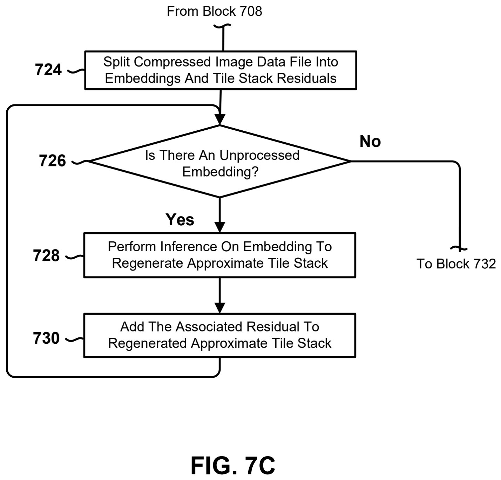

In block 708, the processor may perform the decompression method corresponding to the compression method determined in block 706. Block 708 may be implemented by either the tile-based decompression process 709-722 in FIG. 7B or the embedding-and-residual decompression process 724-730 in FIG. 7C, depending on the compression method identified in block 706.

For example, in response to determining that the spacecraft used compression method 1 (i.e., method 300), the processor may split the compressed image data file into compressed tile stacks in block 709 in FIG. 7B. In response to determining that the spacecraft used compression method 2 (i.e., method 600), the processor may split the compressed image data file into compressed embeddings and compressed tile stack residuals in block 724, illustrated in FIG. 7C.

With reference to FIG. 7B, in determination block 710, the processor may determine whether there is an unprocessed tile stack. In response to determining that there is an unprocessed tile stack (i.e., determination block 710 = "Yes"), the processor may determine the encoding type used by the spacecraft (e.g., as part of block 324 with reference to FIG. 3) in block 712. For example, the processor may read an encoding-type field from per- tile metadata to indicate whether the tile stack used image or video encoding.

In response to determining that the encoding type used by the spacecraft was image encoding (i.e., determination block 712 = "Image Encoding"), the processor may determine whether there is an unprocessed tile in the tile stack in block 714. In some embodiments, the compressed image data file may include alignment transform parameters in metadata in block 330.

For compression method 1, after tile decompression in block 716 or tile stack decompression in block 718, the processor may apply an inverse alignment transform per tile based on the alignment transform parameters before mosaicking in block 732.

In response to determining that there is an unprocessed tile in the tile stack (i.e., determination block 714 = "Yes"), the processor may decompress the tile in block 716.

In response to determining that the encoding type used by the spacecraft was video encoding (i.e., determination block 712 = "Video Encoding"), the processor may decompress the tile stack in block 718.

In response to determining that there is not an unprocessed tile in the tile stack (i.e., determination block 714 = "No"), or in response to decompressing the tile stack (i.e., block 718), the processor may return to block 710 and determine whether there is an unprocessed tile stack.

In response to determining that there is not an unprocessed tile stack (i.e., determination block 710 = "No"), the processor may determine whether the image bits were split in determination block 720.

In response to determining that the image bits were split (i.e., determination block 720 = "Yes"), the processor may add the q bits in block 722. In some embodiments, the processor may reconstruct each n-bit pixel by combining the upper p-bit value and the lower q- bit value, where the lower q -bit value is read or decompressed from the compressed image data file.

With reference to FIG. 7C, in response to determining that the spacecraft used compression method 2 (i.e., method 600), the processor may invoke the embedding-and-residual decompression subflow that begins at block 724.

In determination block 726, the processor may determine whether there is an unprocessed embedding.

In response to determining that there is an unprocessed embedding (i.e., determination block 726 = "Yes"), the processor may decompress the embeddings (if necessary) and perform inference on each embedding to regenerate the approximate tile or tile stack in block 728.

In block 730, the processor may decompress the associated residual and add it to the regenerated approximate tile or tile stacks.

For compression method 2, if alignment transform parameters are included in the metadata, the processor may apply an inverse alignment transform to tiles reconstructed in blocks 728 and 730 before mosaicking in block 732, similar to the process described above.

In response to adding the q bits (i.e., in block 722), or in response to determining that there is not an unprocessed embedding (i.e., determination block 726 = "No"), the processor may reform the image stack from the decompressed tile or tile stack using mosaicking in block 732 illustrated in FIG. 7A. In some embodiments, the decompressed tile stacks may include overlap regions due to the overlap width for tile size selection. The processor may resolve overlap regions during mosaicking in block 732 via aggregation or voting, or static configuration.

In some embodiments, if alignment transform parameters are included in the metadata, the processor may apply an inverse alignment transform to the decompressed tiles or tile stacks before mosaicking (similar to the process described above with reference to method 300 and FIG. 3).

With reference to FIG. 7A, in block 734, the processor may generate the decompressed image file from the reformed image stack.

In block 736, the processor may export the decompressed image file. The exported decompressed image file may be saved to storage, transmitted over a network, made available via an API, or further processed by another application.

The process may exit, end, terminate, or finish in block 738.

One or more of blocks 702-738 may be optional, performed in series or parallel, and performed in a different order in the various embodiments.

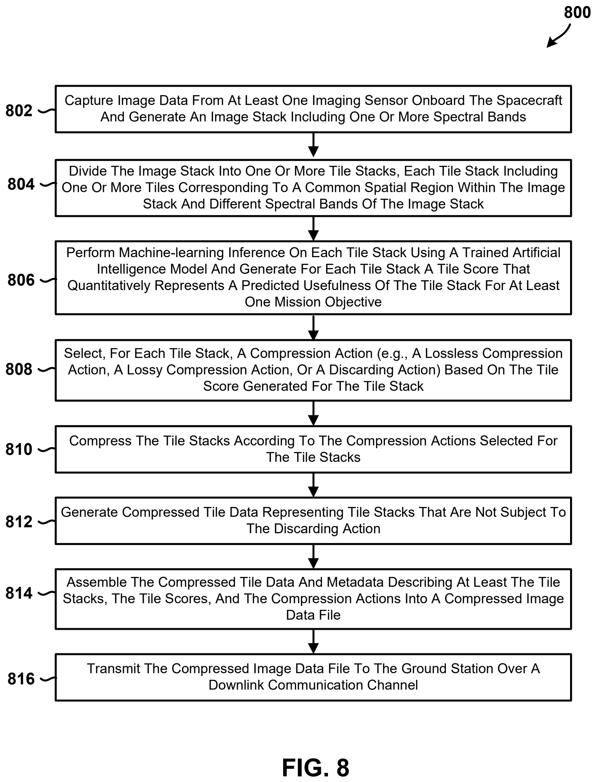

FIG. 8 is a process flow diagram illustrating a method 800 for reducing a data volume downlinked from a spacecraft to a ground station in accordance with some embodiments. Method 800 may be performed by a processor or processing system in a spacecraft.

In block 802, the processing system may capture image data from at least one imaging sensor onboard the spacecraft and generate an image stack containing multiple spectral bands or channels of image data. In some embodiments, the processing system may, for each pixel in the image stack, split a pixel value that has a bit depth of n bits into a high-order value that includes p bits and a low- order value that includes q bits such that p + q = n, generate a high-order image stack that contains the high-order v alues and a low-order image stack that contains the low-order values, and store parameters p and q as configuration data.

In block 804, the processing system may divide the image stack into multiple tile stacks, each including multiple tiles that correspond to a common spatial region within the image stack and to different spectral bands of the image stack. In some embodiments, the processing system may form high-order tile stacks from the high-order image stack and low- order tile stacks from the low- order image stack and track tile-stack identifiers that link corresponding high- order and low- order tile stacks.

In block 806, the processing system may perform machine-I earni ng inference on each tile stack by using a trained artificial intelligence model and generate for each tile stack a tile score that quantitatively represents a predicted usefulness of the tile stack for at least one mission objective. In some embodiments, the artificial intelligence model may generate, for each tile stack, a segmentation mask that classifies pixels in the tile stack into useful pixels and non-useful pixels, compute for each tile stack a coverage value from the segmentation mask that measures a proportion of useful pixels or a proportion of cloud pixels, and compute the tile score for each tile stack from the coverage value. In some embodiments, the processing system may, for each tile stack, generate a modified tile stack by assigning a constant pixel value to pixels that correspond to non-useful pixels in the segmentation mask and by retaining original pixel values for pixels that correspond to useful pixels in the segmentation mask, and pass the modified tile stacks to later compression operations.

In block 808, the processing system may select, for each tile stack, a compression action based on the tile score for that tile stack. In some embodiments, the processing system may select the compression action for each tile stack so that tile stacks with tile scores less than a first threshold receive a lossless compression action, tile stacks with tile scores greater than a second threshold receive a discarding action, and tile stacks with tile scores between the first threshold and the second threshold receive a lossy compression action. In some embodiments, the processing system may apply the lossless compression action or the lossy compression action to useful pixels of each tile stack and apply a different lossy compression action or the discarding action to non-useful pixels of each tile stack, where the different lossy compr ession action has a lower quality level than the lossy compression action that the processing system applies to the useful pixels.

In block 810, the processing system may compress the tile stacks according to the selected compression actions. In some embodiments, the processing system may compress high-order tile stacks derived from the high- order image stack and compress low-order tile stacks derived from the low- order image stack separately. In some embodiments, the processing system may retain the high-o rder values for high-order tile stacks under a lossless compression action and apply more aggressive lossy compression or omission for low-order values for low- order tile stacks while still generating a compressed image data file that contains compressed high-order values and compressed low-order values. In some embodiments, for at least one tile stack, the processing system may select a lossless compression action or a lossy compression action as a video compression action, order tiles within that tile stack across spectral bands according to center wavelengths of the spectral bands to form a tile sequence that has a monotonically increasing or monotonically decreasing ordering in wavelength, provide tiles of the tile sequence as frames to a video encoder that implements a video compression standard such as H.264 or H.265, and generate a compressed video bitstream for the tile sequence as part of compressed tile data.

In some embodiments, the processing system may select a reference tile within a tile stack, compute a geometric alignment transform for each non-reference tile within the tile stack with respect to the reference tile, where each geometric alignment transform corresponds to a Euclidean transform, a similarity transform, an affine transform, or a perspective transform, apply the geometric alignment transforms to the non-reference tiles to generate an aligned tile sequence , provide the aligned tile sequence as the tile sequence to the video encoder, and record parameters of the geometric alignment transforms in metadata in the compressed image data file. In some embodiments, the processing system may form a global tile stack that includes tiles from multiple tile stacks of the image stack, order tiles in the global tile stack across spectral bands into a global tile sequence according to center wavelengths of the spectral bands, provide frames of the global tile sequence to the video encoder, and generate a global compressed video bitstream that represents the global tile stack as part of the compressed tile data. In some embodiments, the processing system may perform part of the compressing by using a hardware acceleration block that resides in a system-on- chip or a field programmable gate array and configure the hardware acceleration block to implement a compression algorithm compliant with a Consultative Committee for Space Data Systems compression standard or a JPEG-family compression standard that supports lossless operation.

In some embodiments, during block 810, the processing system may receive from a compressor that executes during the compressing residual statistics and codec metadata for compressed tile stacks, where the residual statistics include at least residual energy or residual bit counts and the codec metadata includes at least motion vector statistics, reference frame statistics, quantization parameter statistics, or entropy coding statistics. The processing system may compute updated codec configuration parameters from the residual statistics and the codec metadata, where the updated codec configuration parameters include at least a group of pictures configuration, an intra-frame interval, or a bitrate mode, and apply the updated codec configuration parameters to the compressing of subsequent tile stacks in a later image stack captured by the imaging sensor. In some embodiments, the processing system may execute a control artificial intelligence model that receives, as input features, the residual statistics and the codec metadata for compressed tile stacks and output the updated codec configuration parameters that the processing system applies to the compressing of the subsequent tile stacks.

In block 812, the processing system may generate compressed tile data that represents tile stacks that do not receive the discarding action. The compressed tile data may include compressed image-coded tile stacks, compressed video bitstreams for tile sequences or global tile sequences, compressed high-order tile stacks, and compressed low-order tile stacks.

In block 814, the processing system may assemble the compressed tile data and metadata that describes at least the tile stacks, the tile scores, the compression actions, any alignment transform parameters, and any codec configuration parameters into a compressed image data file.

In block 816, the processing system may transmit the compressed image data file to the ground station over a downlink communication channel.

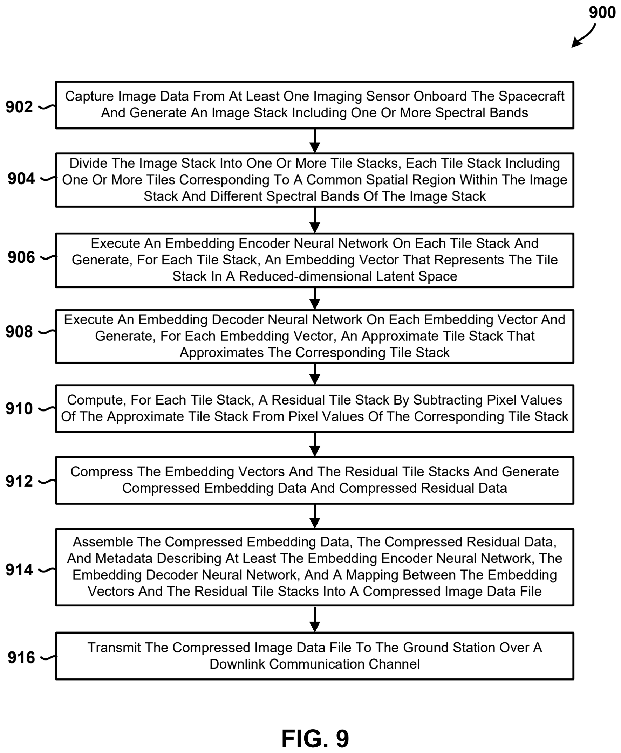

FIG. 9 is a process flow diagram illustrating another method 900 for reducing a data volume downlinked from a spacecraft to a ground station in accordance with some embodiments. Method 900 may be performed by a processor or processing system in a spacecraft.

In block 902, the processing system may capture image data from at least one imaging sensor onboard the spacecraft and may generate an image stack that includes multiple spectral bands.

In block 904, the processing system may divide the image stack into a plurality of tile stacks, each tile stack including a plurality of tiles that correspond to a common spatial region within the image stack and different spectral bands of the image stack. In some embodiments, the processing system may reorder spectral bands in the image stack into a monotonically increasing or decreasing ordering by center wavelength before generating the tile stacks, and may generate tile stacks that include tiles drawn from the reordered spectral bands. In some embodiments, for each tile stack, the processing system may select a reference tile that corresponds to a reference spectral band and may compute geometric alignment transforms for non-reference tiles in that tile stack relative to the reference tile. The processing system may apply the geometric alignment transforms to the non-reference tiles to generate an aligned tile stack.

In block 906, the processing system may execute an embedding encoder neural network on each tile stack or on each aligned tile stack and may generate, for each tile stack, an embedding vector that represents that tile stack in a reduced dimensional latent space. In some embodiments, the processing system may use as the embedding encoder neural network and as the embedding decoder neural network respective neural networks derived from a foundation model that a developer pre-trained on a broad earth observation dataset and fine- tuned on earth observation data captured by the imaging sensor or on simulated earth observation data that correspond to a mission profile of the spacecraft. In some embodiments, the processing system may use as the embedding encoder neural network a student neural network generated by knowledge distillation from the foundation model. The student neural network may have a reduced parameter count that satisfies memory and processing constraints of on-board hardware in the spacecraft.

In block 908, the processing system may execute an embedding decoder neural network on each embedding vector and may generate, for each embedding vector, an approximate tile stack that approximates the corresponding tile stack.

In block 910, the processing system may compute, for each tile stack, a residual tile stack by subtracting pixel values of the approximate tile stack from pixel values of the corresponding tile stack and may store residual tile stacks in memory for later compression.

In block 912, the processing system may compress the embedding vectors and the residual tile stacks, and generate compressed embedding data and compressed residual data. In some embodiments, the processing system may apply an entropy encoder to the residual tile stacks during compression of the residual tile stacks and generate entropy-coded residual bitstreams as the compressed residual data. In some embodiments, the processing system may compute a single embedding vector for an entire image stack by executing the embedding encoder neural network on data drawn from multiple tile stacks, use the embedding decoder neural network and that embedding vector to generate a reconstructed image stack, compute residual image values for the entire image stack, and may compress the residual image values and the embedding vector as the compressed residual data and the compressed embedding data in the compressed image data file.

In block 914, the processing system may assemble the compressed embedding data, the compressed residual data, and metadata into a compressed image data file. The metadata may describe at least the embedding encoder neural network, the embedding decoder neural network, a mapping between the embedding vectors and the residual tile stacks, any spectral band reordering applied to the image stack, and parameters of geometric alignment transforms computed for aligned tile stacks.

In block 916, the processing system may transmit the compressed image data file to the ground station over a downlink communication channel.

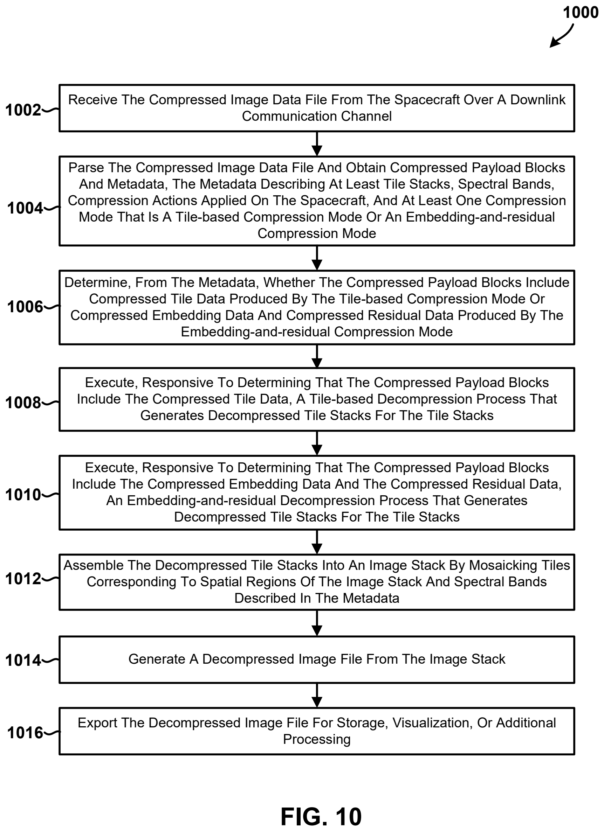

FIG. 10 is a process flow diagram illustrating a method 1000 of reconstructing hyperspectral image data at a ground station from a compressed image data file downlinked from a spacecraft in accordance with some embodiments. Method 1000 may be performed by a processor or processing system in a ground station.

In block 1002, the processing system may receive the compressed image data file from the spacecraft over a downlink communication channel.

In block 1004, the processing system may parse the compressed image data file and obtain compressed payload blocks and metadata. The metadata may describe tile stacks, spectral bands, compression actions applied on the spacecraft, and at least one compression mode that is a tile-based compression mode or an embedding-and- residual compressi on mode. The metadata may further describe whether geometric alignment, pixel splitting into high-order values and low- order values, or tile discarding occurred on the spacecraft.

In block 1006, the processing system may determine from the metadata whether the compressed payload blocks include compressed tile data produced by the tile-based compression mode or compressed embeddi ng data and compressed residual data produced by the embedding-and- residual compression mode. In some embodiments, the processing system may determine that the compressed image data file contains both types of compressed payload blocks and may schedule both decompression processes in parallel or in sequence.

In block 1008, the processing system may execute, in response to determining that the compressed payload blocks include the compressed tile data, a tile-based decompression process that generates decompressed tile stacks for the tile stacks. Executing the tile-based decompression process may include identifying, from the metadata, tile stacks that were subject to lossless or lossy compression actions, and tile stacks that were subject to a discarding action. For tile stacks compressed using image compression, the processing system may apply an image decompressor to the compressed tile payloads and generate decompressed tile stacks.

For tile stacks compressed using video compression, the processing system may apply a video decompressor to the compressed video bitstreams and generate decompressed tile stacks. For tile stacks that were subject to the discarding action, the processing system may reconstruct placeholder tile stacks by assigning a constant pixel value or a predefined null value to pixels of those tile stacks. The processing system may read, from the metadata, geometric alignment transform parameters that are associated with tile stacks that were aligned on the spacecraft and may apply inverse geometric alignment transforms to decompressed tiles of those tile stacks after performing image decompression or video decompression so that band geometries of the decompressed tiles are restored to match an original geometry of the image stack captured by the imaging sensor. The processing system may detect, from the metadata, that pixels in the image stack were split into high-order values and low-order values on the spacecraft, may decompress high- order tile stacks and low-order tile stacks from the compr essed payload blocks, and may combine the high-order values and the low- order values for each pixel to reconstruct n- bit pixel values that the processing system writes into a reconstruction buffer. For the reconstructed n-bit pixel values, the processing s ystem may fit a multidimensional polynomial surface of an order r across pixels in at least one tile stack, may compute correction offsets that reduce unit-in- the- last- place errors in lower- order bits of the reconstructed n-bit pixel values subject to a bo und of m units in the last place, and may apply the correction offsets to the reconstructed n-bit pixel values to generate corrected pixel values in the reconstruction buffer.

In block 1010, the processing system may execute, in response to determining that the compressed payload blocks include the compressed embedding data and the compressed residual data, an embedding-and- residual decompression process that generates decompressed tile stacks for the tile stacks. Executing the embedding-and- residual decompression process may include decoding, for each tile stack, an embedding vector from the compressed embedding data, executing an embedding decoder neural network that is described in the metadata on the embedding vector and generating an approximate tile stack, decoding a residual tile stack from the compressed residual data, and adding pixel values of the residual tile stack to pixel values of the approximate tile stack to generate a reconstructed tile stack. The processing system may insert each reconstructed tile stack into an image stack using the tile indices and spectral band indices described in the metadata.

In block 1012, the processing system may assemble the decompressed tile stacks into the image stack by mosaicking tiles that correspond to spatial regions of the image stack and spectral bands described in the metadata. When performing mosaicking, the processing system may resolve overlap regions between tiles by applying an overlap rule that aggregates pixel values from overlapping tiles according to an average, a weighted blend, or a priority assignment derived from tile scores stored in the metadata and write resulting aggregated pixel values into corresponding spatial locations in the image stack.

In block 1014, the processing system may generate a decompressed image file from the image stack. The decompressed image file may preserve spectral band ordering and metadata that the ground station uses in downstream processing tasks.

In block 1016, the processing system may export the decompressed image file for storage, visualization, or additional processing, for example, by writing the decompressed image file to a file system, inserting the decompressed image file into a catalog, or providing the decompressed image file to an analysis service through an application programming interface.

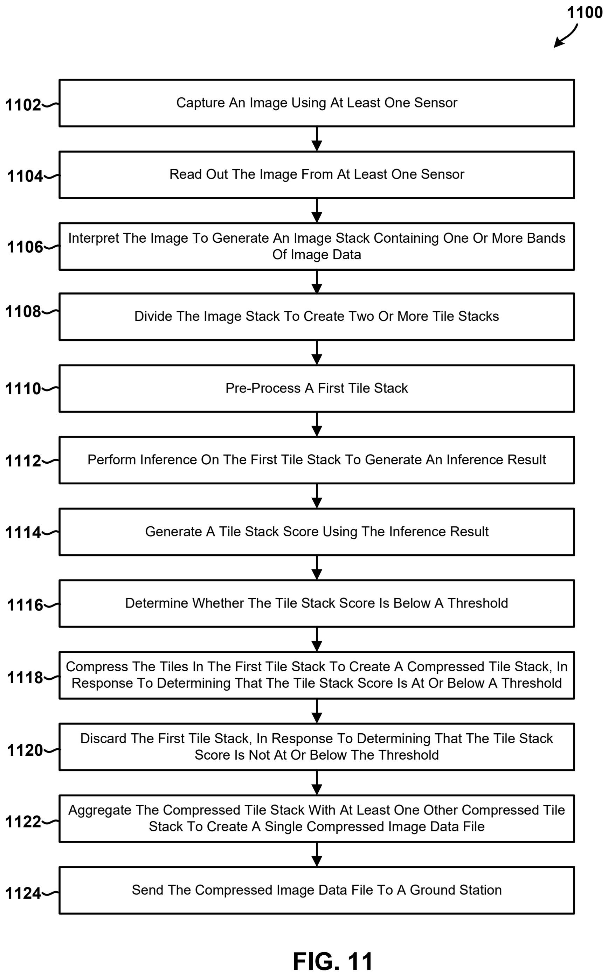

FIG. 11 is a process flow diagram illustrating a method 1100 of reducing the amount of image data sent from the spacecraft to a ground station in accordance with some embodiments. Method 1100 may be performed by a processor or processing system in a spacecraft.

In block 1102, the processing system may capture an image using at least one sensor.

In block 1104, the processing system may read out the image from at least one sensor. The processing system may extract metadata from the image, such as exposure settings, sensor configuration, geolocation, and time tags, and store it in association with the image for later use.

In block 1106, the processing system may interpret the image to generate an image stack that contains one or more bands of image data. The image stack may include hyperspectral or multispectral bands that correspond to different center wavelengths.

In block 1108, the processing system may divide the image stack to create two or more tile stacks. Each tile stack may include multiple tiles that correspond to a common spatial region within the image stack and different spectral bands of the image stack.

In block 1110, the processing system may pre-process a first tile stack. In some embodiments, the processing system may create a tile stack subset from the first tile stack, where the tile stack subset contains fewer tiles than the first tile stack, for example, by selecting tiles that intersect an area of interest or by selecting a subset of spectral bands. The pre-processing may include intensity normalization, resizing tiles to match the input size of an artificial intelligence model, or masking out regions that fall outside mission-defi ned bounds.

In block 1112, the processing system may perform inference on the first tile stack to generate an inference result. In some embodiments, the processing system may perform inference on the tile stack subset created in block 1110 instead of on the full first tile stack and may pass the tile stack subset to a trained artificial intelligence model as input. In some embodiments, the artificial intelligence model may be a segmentation network that outputs a segmentation mask assigning per-pixel labels, such as useful/non-useful or cloud/clear.

In block 1114, the processing system may generate a tile stack score using the inference result. In some embodiments, the processing system may generate a tile stack subset score from the inference result for the tile stack subset and use that score as the tile stack score for the first tile stack. For example, the processing system may compute a fraction of pixels in the segmentation mask that carry a useful label or a cloud label, and map that fraction to a scalar score using a lookup table or a simple arithmetic function.

In block 1116, the processing system may determine whether the tile stack score is below a threshold. In some embodiments, the processing system may compare the tile stack subset score against a configured threshold that represents a mission parameter, such as a maximum permitted cloud coverage or a minimum fraction of useful pixels.

In block 1118, the processing system may compress the tiles in the first tile stack to create a compressed tile stack in response to determining that the tile stack score is not below the threshold. In some embodiments, the processing system may compress portions of the tiles in the first tile stack, such as those pixels that the segmentation network classifies as useful, and may either omit other portions or represent them with a constant pixel value. In some embodiments, the processing system may compress the first tile stack using JPEG compression running on a system-on- chip (S oC), a field-programmable gate array (FPGA), a graphics processing unit (GPU), or a central processing unit (CPU), and configure a JPEG-family codec for lossless or lossy operation according to mission settings.

In some embodiments, the processing system may compress the tiles in the first tile stack by ordering the tiles in the first tile stack so that center wavelengths of the bands in the tiles are either monotonically increasing or monotonically decreasing in wavelength, starting a video compressor, adding the tiles in the first tile stack to the video compressor so that each tile is added as a new frame, and receiving compressed video from the video compressor as the compressed tile stack. In some embodiments, the processing system may add the tiles in the first tile stack to a global tile stack that aggregates tiles across tile stacks for the image stack, and may store an index linking the first tile stack to positions within the global tile stack. In some embodiments, the processing system may select between image compression and video compression based on a number of tiles in the first tile stack, using image compression when the number of tiles in the first tile stack is less than or equal to a specified threshold and using video compression when the number of tiles in the first tile stack is greater than the specified threshold. In some embodiments, the processing system may apply lossy compression to the tiles in the first tile stack when the tile stack score is below the threshold, for example, by selecting a quantization level that reduces bitrate while preserving features prioritized by the mission.

In block 1120, the processing system may discard the first tile stack in response to determining that the tile stack score is not below the threshold. Discarding the first tile stack may include omitting its pixel data from subsequent compression and aggregation operations and updating metadata to mark it as discarded.

In block 1122, the processing system may aggregate the compressed tile stack with at least one other compressed tile stack to create a single compressed image data file. Aggregating the compressed tile stack with at least one other compressed tile stack may include collecting compressed payloads and associated indices for tile stacks that were not discarded and arranging those payloads in a container format. In some embodiments, when the processing system added tiles from multiple tile stacks to the global tile stack in block 1118, the processing system may aggregate compressed tile data by ordering the tiles in the global tile stack so that center wavelengths of the bands in the tiles are either monotonically increasing or monotonically decreasing, starting a video compressor, adding the tiles in the global tile stack to the video compressor so that each tile is added as a new frame, and receiving compressed video from the video compressor as a global compressed bitstream that forms part of the single compressed image data file. In some embodiments, aggregating the compressed tile stack with the at least one other compressed tile stack to create the single compressed image data file may include further compressing the compressed tile stack and the at least one other compressed tile stack together, for example by packaging compressed tile payloads in an archive file or by applying an additional entropy coder across the set of compressed tile payloads. In some embodiments, the processing system may add the metadata it extracted in block 1104 to the single compressed image data file, for example, by inserting a header block containing sensor settings, geolocation, and time tags associated with the image.

In block 1124, the processing system may send the compressed image data file to a ground station. The processing system may transmit the compressed image data file over a downlink communication channel, such as a radio frequency link, to the ground station for storage and further analysis.

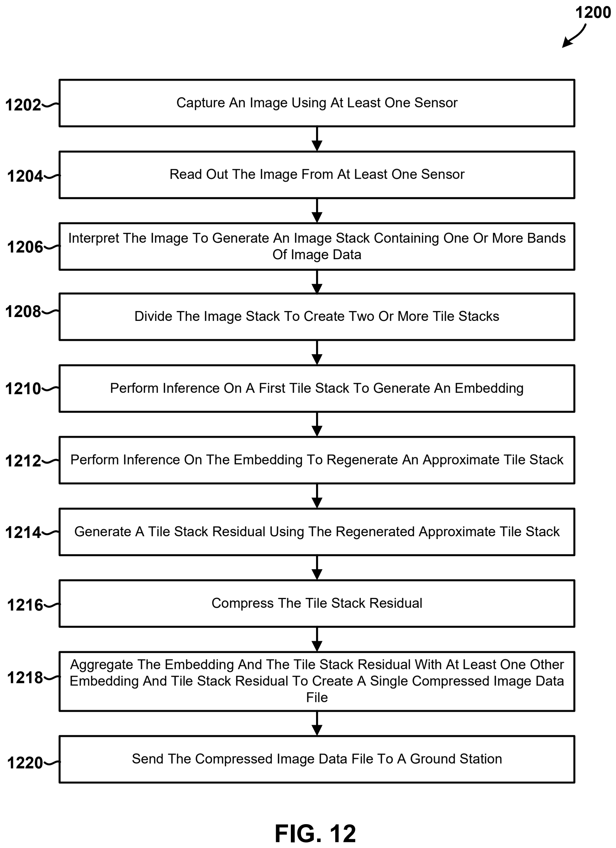

FIG. 12 is a process flow diagram illustrating a method 1200 of reducing the amount of image data sent from the spacecraft to a ground station in accordance with some embodiments. Method 1200 may be performed by a processor or processing system in a spacecraft.

In block 1202, the processing system may capture an image using at least one sensor.

In block 1204, the processing system may read out the image from at least one sensor. The processing system may extract metadata from the image, such as exposure settings, imaging-sensor parameters, attitude i nformati on, and ti mestamps, and may store the metadata in association with the image for later inclusion in a compressed image data file.

In block 1206, the processing system may interpret the image to generate an image stack that contains one or more bands of image data. The image stack may include multispectral or hyperspectral bands that share a common spatial grid.

In block 1208, the processing system may divide the image stack to create two or more tile stacks. Each tile stack may include tiles that correspond to a common spatial region in the image stack and different spectral bands of the image stack.

In block 1210, the processing system may perform inference on a first tile stack to generate an embedding. In some embodiments, the processing system may perform inference on one or more individual tiles that form a tile stack subset of the first tile stack and may generate a tile stack subset embedding that represents the tile stack subset in a latent space. The processing system may store a mapping between the tile stack subset embedding and indices of tiles in the first tile stack.

In block 1212, the processing system may perform inference on the embedding to regenerate an approximate tile stack. In some embodiments, the processing system may perform inference on the tile stack subset embedding and may regenerate an approximate tile stack subset that approximates the original tile stack subset. The processing system may place the approximate tile stack subset into a buffer that aligns with positions of the corresponding tiles in the first tile stack.

In block 1214, the processing system may generate a tile stack residual using the regenerated approximate tile stack. In some embodiments, the processing system may generate a tile stack subset residual by computing differences between pixel values of the approximate tile stack subset and pixel values of the original tile stack subset and may write the tile stack subset residual into a residual buffer that matches the tile stack subset layout.

In block 1216, the processing system may compress the tile stack residual. The processing system may apply an entropy encoder or another compression algorithm to the tile stack residual or to the tile stack subset residual and may generate compressed residual data that occupies fewer bits than the uncompressed residual values.

In block 1218, the processing system may aggregate the embedding and the tile stack residual with at least one other embedding and tile stack residual to create a single compressed image data file. Aggregating the embedding and the tile stack residual with the at least one other embedding and tile stack residual may include compressing the embedding, the tile stack residual, and the at least one other embedding and tile stack residual together to create the single compressed image data file. In some embodiments, the processing system may add the metadata extracted in block 1204 to the single compressed image data file, for example by inserting a header section that records sensor metadata, tile-stack indices, and embedding- to- residual mappings.

In block 1220, the processing system may send the compressed image data file to the ground station over a downlink communication channel. The compressed image data file may carry compressed embedding data, compressed residual data, and the metadata that the ground station uses to reconstruct an image stack.

Some embodiments may include methods, and computing systems configured to implement the methods, of processing hyperspectral image data captured by a spacecraft to generate a compressed image file for efficient transmission to a ground station. In some embodiments, the methods may include capturing hyperspectral image data using an onboard imaging sensor, generating an image stack that includes multiple spectral bands, and dividing the image stack into tile stacks. In some embodiments, each tile stack may include a subset of the spectral bands.

In some embodiments, the methods may include performing inference on each tile stack using a pre-trained AI model to identify features of interest and generate a tile stack score based on the identified features. Some embodiments may include determining whether the tile stack score is below a predetermined threshold. In some embodiments, the computing system may compress the tile stack using a lossless compression algorithm and aggregate the compressed tile stacks into a compressed image file in response to determining that the score is below the threshold. In some embodiments, the computing system may discard the tile stack in response to determining that the score is not below the threshold. Some embodiments may include transmitting the compressed image file to a ground station.

In some embodiments, the computing system may use the pre-trained AI model to perform classification, detection, segmentation, or regression of features of interest within the tile stack. In some embodiments, the predetermined threshold may be based on a percentage of cloud coverage or other mission-specific parameters. In some embodiments, the methods may include generating embeddings for tile stacks, reconstructing approximate tile stacks from the embeddings using a decoder, calculating residual matrices by comparing the reconstructed tile stacks to original tile stacks, and compressing the residual matrices using entropy-based algorithms. In some embodiments, the methods may include reordering spectral bands in tile stacks into monotonically increasing or decreasing wavelength order. In some embodiments, compression may include splitting pixel data within a tile stack into two parts and compressing them separately. Some embodiments may apply lossy compression to tile stacks not meeting the predetermined threshold, with compression quality adjusted based on the tile stack score.

In some embodiments, the methods may include processing tile stacks in parallel to enhance computational efficiency. In some embodiments, the methods may include applying video compression algorithms, treating tile stacks as sequential video frames, or formatting compressed image files as Zip or 7z archives for efficient packaging.

In some embodiments, the methods may include adding metadata to the compressed image file, such as imaging sensor parameters, geolocation data, or tile stack scores. In some embodiments, the compressed image file and metadata may be stored in onboard memory prior to transmission. In some embodiments, the methods may include transmitting the file using a narrowband radio frequency communication link.

In some embodiments, the methods may include using a neural network supervisor to monitor and adjust processing parameters. In some embodiments, the inference by the AI model may include using federated learning techniques that allow edge devices to collaboratively refine models and preserve data privacy. In some embodiments, the methods may be performed in spacecraft operating in extreme network edge environments.

Further embodiments may include a computing device (e.g., edge device, etc.) having a processing system configured with processor-executable instructions to perform various operations corresponding to the methods summarized above. Further embodiments may include a non-transitory processor-readable storage medium having stored thereon processor-executable instructions configured to cause a processing system to perform various operations corresponding to the method operations summarized above. Further embodiments may include a computing device having various means for performing functions corresponding to the method operations summarized above.

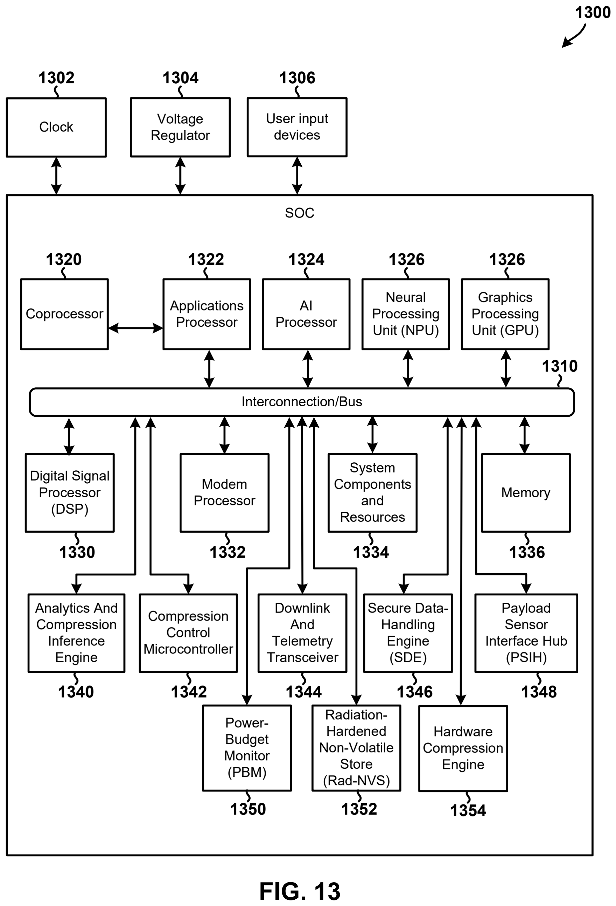

Various embodiments may be implemented in single-processor or multiprocessor computer systems, including a SoC or SiP. FIG. 13 illustrates an example computing system or SoC 1300 architecture that may be included in edge devices implementing the various embodiments (e.g., capturing hyperspectral Earth observation image data, performing on-board AI- driven compression and tile scoring, generating embeddings and residuals, and downlinking compressed image data files).

In the example illustrated in FIG. 13, the SoC 1300 includes a clock 1302, a voltage regulator 1304, user input devices 1306 (e.g., for test or ground-based configurations), a coprocessor 1320 (e.g., a vector coprocessor), an applications processor 1322, an AI processor 1324, a neural processing unit (NPU) 1326, a graphics processing unit (GPU) 1328, a digital signal processor (DSP) 1330, a modem processor 1332, system components and resources 1334, memory 1336, a tile analytics and compression inference engine 1340, a compression-control microcontroller 1342, a downlink and telemetry transceiver 1344, a secure data-handling engine (SDE) 1346, a payload sensor interface hub (PSIH) 1348, a power-budget monitor (PB M) 1350, a radiation-hardened non- volatile store (Rad-NV S) 1352, and a hardware compression engine 1354. The processors and components may be interconnected via an interconnection/bus 1310, which may include a high-performance network- on- chip (NoC), a reconfigurable interconnect fabric, or a shared bus architecture (e.g., AMBA-type bus) suitable for moving hyperspectral image tiles, embeddings, residuals, and codec metadata at line rate.

In some embodiments, any of the processors in the SoC 1300 may function as a central processing unit (CPU), microprocessor unit (MPU), or arithmetic logic unit (ALU). The SoC 1300 may execute software programs that implement the tile-based compression pipelines, embedding and residual pipelines, decompression routines, and neural-network inference described herein, and perform arithmetic, logical, control, and input/output (I/O) operations as specified by program instructions (e.g., processor-executable instructions stored in memory 1336 or Rad-NVS 1352). One or more of the coprocessors may be configured to assist the applications processor 1322 in these operations. Each processor may include one or more cores, and each processor or core may perform operations independent of other processors or cores, for example, dedicating one core to AI tile scoring and another core to compression control. In some embodiments, the SoC 1300 may include a processor that executes a general-purpose operating system (e.g., Linux- type) and another processor that executes a real-time operating system or firmware optimized for deterministic compression and downlink scheduling.

The clock 1302 may be configured to generate a stable reference frequency, distribute that frequency through buffered outputs, and align internal timing for pixel readout, AI inference, compression, and downlink framing operations. The voltage regulator 1304 may be configured to accept input from external supply rails (e.g., solar array and battery rails) and produce regulated voltage domains that satisfy load requirements for digital, analog, and mixed-signal circuits within the SoC 1300, including the hardware compression engine 1354 and the AI processor 1324. The user-input devices 1306 may be configured to capture operator commands via tactile or electrical interfaces and forward encoded control signals to the applications processor 1322 via an I/O module. The interconnection fabric or bus 1310 may be configured to transfer hyperspectral tile data, embeddings, residuals, codec configuration data, and control messages among functional blocks within the SoC 1300 and support quality-of- service policies that maintain deterministic latency for time-sensitive compression and downlink operations.

The vector coprocessor 1320 may be configured to execute wide-integer and floating-point vector instructions and to accelerate linear- algebra workloads arising in image preprocessing, band alignment, and residual computation. The applications processor 1322 may be configured to run the primary operating system, manage high-level mission logic, orchestrate tile-stack generation, initiate AI-based tile scoring and embedding extraction, and coordinate resource-allocation requests from subordinate engines, such as the hardware compression engine 1354. The AI processor 1324 may be configured to perform general neural-network inference tasks, including tile classification, cloud segmentation, feature detection, and control-model inference for setting codec parameters, in a manner that complements the specialized capabilities of the neural processing unit 1326. The neural processing unit 1326 may be configured to execute deep-learning graphs with weight compression and low-precision arithmetic and to perform high- throughput processing of tile stacks for segmentation masks, tile scores, and embeddings within the available on-board energy budg et.

The graphics processing unit 1328 may be configured to perform image and tile warping, apply geometric transforms for band alignment, and accelerate resampling operations that prepare tile stacks for video compression or extraction. The digital signal processor 1330 may be configured to filter sensor samples, perform transforms such as discrete cosine transforms or fast Fourier transforms, and precondition or post-process pixel data for compression and decompression. The modem processor 1332 may be configured to implement baseband protocols, modulate and demodulate waveforms for ground-stati on links, and manage forward-error- correction coding for compressed image data files. The system-components- and- resources block 1334 may be configured to coordinate power amplification, oscillator control, peripheral bridging, and mixed-signal housekeeping for the SoC 1300. The memory 1336 may be configured to store executable code, AI model weights, tile stacks, embeddings, residual matrices, codec configuration tables, and metadata fields, and provide multi-port access to requesting engines across the interconnection fabric 1310 so that AI inference, compression, and downlink can proceed in parallel.

The tile analytics and compression inference engine 1340 may be configured to ingest tile stacks from memory 1336, execute one or more neural networks for tile scoring and segmentation, compute tile stack scores for mission objectives such as cloud-free coverage or target presence, and output tile- level and band- level decision variables to the compression-control microcontroller 1342. The compression-control mi crocontroller 1342 may be configured to accept tile scores and residual statistics from the hardware compression engine 1354, evaluate resource state vectors and downlink budgets, apply compression policies and control-model outputs, and issue configuration commands to the hardware compression engine 1354 and to the AI processor 1324 for subsequent images. The downlink and telemetry transceiver 1344 may be configured to generate radio-frequency carrier signals, packetize compressed image data files and associated metadata, route frames toward a ground station, and report link-layer statistics back to the compression- control microcontroller 1342. The secure data-handl i ng engine 1346 may be configured to apply authenticated encryption to outgoing compressed image data files, decrypt incoming configuration updates or AI model updates, perform key management operations, and enforce secure boot policies that safeguard stored binaries, AI models, and codec firmware. The payload sensor interface hub 1348 may be configured to interface with hyperspectral imagers and other payload sensors, multiplex high-speed pixel streams, gate sensor clocks under applications-processor control, and perform sanity checks (e.g., histogram or checksum checks) that reject corrupt or saturated acquisitions before compression.

The power-budget monitor 1350 may be configured to sample solar-array output, battery charge state, and load currents, compute available energy margins for compression and AI inference tasks, and trigger interrupts to the compression-control microcontroller 1342 when scheduled compression operations threaten configured margin thresholds so that compression settings or tile selection policies may be adjusted. The radiation-hardened non- volatile store 1352 may be configured to retain AI model binaries, codec firmware, compression policy tables, and mission configuration archives across single-event upsets and to restore those artifa cts during recovery sequences or after software updates. The hardware compression engine 1354 may be configured to implement one or more image codecs and video codecs, including lossless or near-lossless variants (e.g., CCSDS- type compression, JPEG-L S- type compression, and H.264- or H.265- type video compression) and entropy coding hardware for residual streams, and expose configuration registers that the compression-control microcontroller 1342 adjusts based on tile scores and residual statistics.

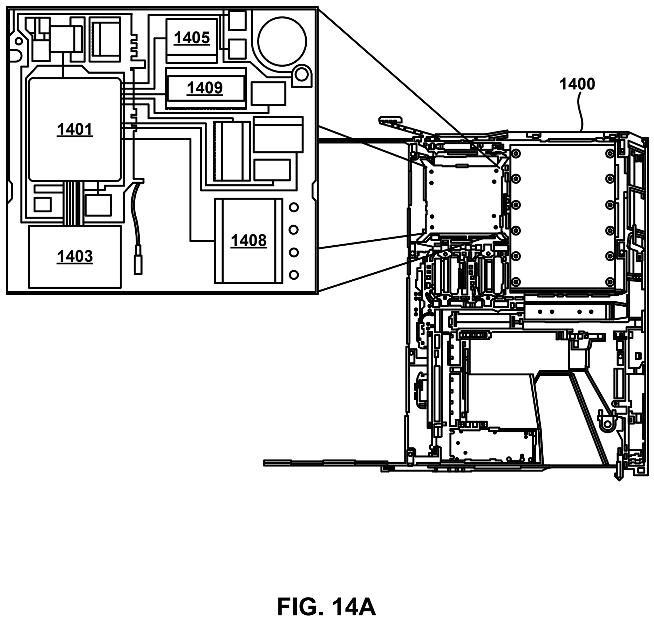

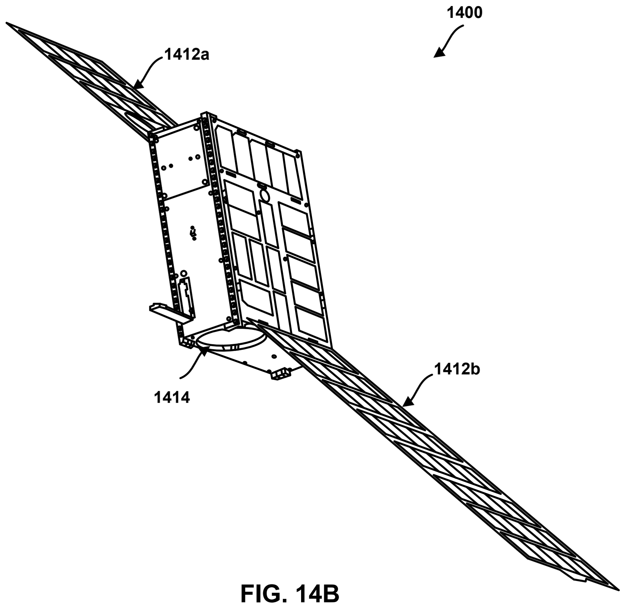

The various embodiments may be implemented on different types of edge devices, including modern satellites such as the BoxSat 1400 illustrated in FIGs. 14A and 14B. The BoxSat 1400 may include a SoC 1300 and/or one or more processors 1401 connected to memory 1403, which may include standard-performance memory, high-performance memory, volatile memory, non-volatile memory, dynamic memory, static memory, or any combination thereof. For example, memory 1403 may include dynamic random-access memory (DRAM) for volatile storage and non-volatile memory, such as flash or a Non-Volatile Memory Express (NVMe) solid-state drive (SSD). The BoxSat 1400 may also include network access ports, communication circuitry, or a transceiver 1405 connected to the processor 1401 for establishing network data connections. Solar panels 1412a and 1412b may supply power to the satellite by converting solar energy into electrical energy that supports sustainable satellite operations. The BoxSat 1400 may also include various instruments and sensors 1408 for data collection and environmental monitoring, which may include cameras 1414, temperature sensors, and radiation detectors, depending on mission objectives. In addition, the BoxSat 1400 may include attitude control systems 1409 to maintain proper orientation in space and for accurate positioning and data collection. These components may be integrated into a compact and durable structure that allows the BoxSat 1400 to carry out complex operations in the demanding environment of space.

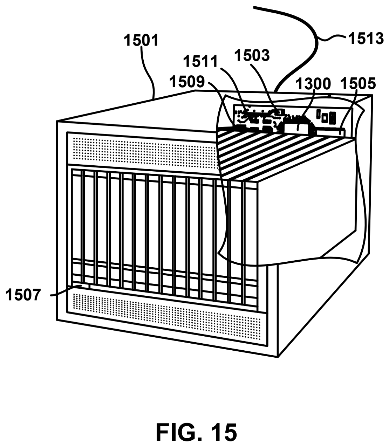

All or portions of some embodiments may be implemented in the cloud or on a variety of commercially available computing devices, such as the server computing device 1501 illustrated in FIG. 15. The server device 1501 may include a SoC 1300 or one or more processors 1503 (e.g., multi-core processors) coupled to memory 1505, storage interfaces 1507 such as USB ports and NVMe slots, and network access ports 1509 that allow data connections through a network interface card (NIC) 1511 and a communication network 1513 (e.g., an Internet Protocol (IP) network) connected to other network elements and to one or more ground stations. The server device 1501 may execute decompression pipelines corresponding to the compression methods described herein, including image and video decompression, inverse geometric alignment, pixel recombination, and embedding-and- residual reconstruction.

The processor 1503 may be any programmable microprocessor, microcomputer, or multiple processor chip or chips that may be configured by software instructions (applications) to perform a variety of functions, including the functions of the various embodiments described herein, such as AI-based analysis of decompressed images, generation of new AI models or control models, and preparation of configuration updates for uplink to spacecraft. Multiple processors 1503 may be provided, such as one processor dedicated to handling downlinked compressed image data files and network traffic, and another processor dedicated to running decompression, mosaicking, and AI training workloads. Typically, software applications may be stored in the internal memory or external storage before they are accessed and loaded into the processor 1503. The processor 1503 may include internal memory sufficient to store the application software instructions and cooperate with accelerators similar to the AI processor, the GPU, and the hardware compression engine in order to perform decompression and AI operations at scale.

For the sake of clarity and ease of presentation, the methods discussed in this application are presented as separate embodiments. While each method is delineated for illustrative purposes, it should be clear to those skilled in the art that various combinations or omissions of these methods, blocks, operations, etc., could be used to achieve a desired result or a specific outcome. It should also be understood that the descriptions herein do not preclude the integration or adaptation of different embodiments of the methods, blocks, operations, etc., from producing a modified or alternative result or solution. The presentation of individual methods, blocks, operations, etc., should not be interpreted as mutually exclusive, limiting, or as being required unless expressly recited as such in the claims.

The processors or processing units discussed in this application may be any programmable microprocessor, microcomputer, or multiple processor chip or chips that may be configured by software instructions (applications) to perform a variety of functions, including the functions of various embodiments described. In some computing devices (MOC, satellite, etc.), multiple processors may be provided, such as one processor within first circuitry dedicated to wireless communication functions and one processor within second circuitry dedicated to running other applications. Software applications may be stored in the memory before they are accessed and loaded into the processor. The processors may include internal memory sufficient to store the application software instructions.

As used in this application, terminology such as "component," "module," "system," etc., is intended to encompass a computer-related entity. These entities may involve, among other possibilities, hardware, firmware, a blend of hardware and software, software alone, or software in an operational state. As examples, a component may encompass a running process on a processor, the processor itself, an object, an executable file, a thread of execution, a program, or a computing device. To illustrate further, both an application operating on a computing device and the computing device itself may be designated as a component. A component might be situated within a single process or thread of execution, or distributed across multiple processors or cores. In addition, these components may operate based on various non-volatile computer-readable media that store diverse instructions and/or data structures. Communication between components may take place through local or remote processes, function, or procedure calls, electronic signaling, data packet exchanges, memory interactions, among other known methods of network, computer, processor, or process-related communications.

A variety of memory types and technologies, both currently available and anticipated for future development, may be incorporated into systems and computing devices that implement the various embodiments. These memory technologies may include non-volatile random-access memories (NVRAM) such as magnetoresistive RAM (MRAM), resistive random-access memory (ReRAM or RRAM), phase-change memory (PCM, PC-RAM, or PRAM), ferroelectric RAM (FRAM), spin-transfer torque magnetoresistive RAM (STT-MRAM), and three-dimensional cross point (3D XPoint) memory. Non-volatile or read-only memory (ROM) technologies may also be included, such as programmable read-only memory (PROM), field programmable read-only memory (FPROM), and one-time programmable non-volatile memory (OTP NVM). Volatile random-access memory (RAM) technologies may further be utilized, including dynamic random-access memory (DRAM), double data rate synchronous dynamic random-access memory (DDR SDRAM), static random-access memory (SRAM), and pseudostatic random-access memory (PSRAM). Additionally, systems and computing devices implementing these embodiments may use solid-state non-volatile storage mediums, such as FLASH memory. The aforementioned memory technologies may store instructions, programs, control signals, and/or data for use in computing devices, SoC components, or other electronic systems. Any references to specific memory types, interfaces, standards, or technologies are provided for illustrative purposes and do not limit the claims to any particular memory system or technology unless explicitly recited in the claim language.

The foregoing method descriptions and the process flow diagrams are provided merely as illustrative examples. They are not intended to require or imply that the blocks of the various aspects may be performed in the order presented. As will be appreciated by one of skill in the art, the order of steps in the foregoing aspects may be performed in any order. Words such as "thereafter," "then," "next," etc., are not intended to limit the order of the blocks; these words are simply used to guide the reader through the description of the methods. Further, any reference to claim elements in the singular, for example, using the articles "a," "an," or "the," is not to be construed as limiting the element to the singular.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented in hardware or software depends on the particular application and the design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more embodiments, the functions described may be implemented in hardware, software, firmware, or any combination thereof. If implemented in software, the functions may be stored as one or more instructions or code on a non-transitory computer-readable medium or non-transitory processor-readable medium. The operations of a method or algorithm disclosed herein may be embodied in a processor-executable software module that resides on a non-transitory computer-readable or processor-readable storage medium. Non-transitory computer-readable or processor-readable storage media include any storage media that may be accessed by a computer or processor. By way of example, but not limitation, such non-transitory computer-readable or processor-readable media may include RAM, ROM, EEPROM, flash memory, SSDs, NVMe drives, 3D NAND flash, or any other medium capable of storing program code in the form of instructions or data structures that may be accessed by a computer. Cloud-based storage solutions, including infrastructure-as-a-service (IaaS) platforms, may provide scalable and distributed options for storing and accessing program code. In addition, the operations of a method or algorithm may reside as one or more sets of instructions or code on a non-transitory processor-readable or computer-readable medium, which may be incorporated into a computer program product. Emerging technologies, such as quantum-computing storage media and blockchain-based storage solutions, may enhance data integrity and security. AI and ML-improved hardware accelerators, such as GPUs, TPUs, and other dedicated processing units, may be used to efficiently execute complex algorithms.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the following claims and the principles and novel features disclosed herein.

## Claims

1. A computer-implemented method performed by a processing system in a spacecraft for reducing a data volume downlinked from the spacecraft to a ground station, the method comprising:
capturing image data from at least one imaging sensor onboard the spacecraft and generating an image stack including one or more spectral bands;
dividing the image stack into one or more tile stacks, each tile stack including one or more tiles corresponding to a common spatial region within the image stack and one or more spectral bands of the image stack;
performing machine learning inference on each tile stack using a trained artificial intelligence model and generating for each tile stack a tile stack score that quantitatively represents a predicted usefulness of the tile stack for at least one mission objective;
selecting, for each tile stack, a compression action that is a lossless compression action, a lossy compression action, or a discarding action, the compression action for the tile stack being selected based on the tile stack score generated for the tile stack;
compressing the tile stacks according to the compression actions selected for the tile stacks and generating compressed tile stack data for tile stacks that are not subject to the discarding action;
assembling the compressed tile stack data into a compressed image data file; and
transmitting the compressed image data file to the ground station over a downlink communication channel.

2. The method of claim 1, further comprising:
extracting imaging-sensor metadata associated with the image data; and
adding the imaging-sensor metadata and tile stack metadata to the compressed image data file, the tile stack metadata describing one or more of the tile stacks, the tile stack scores, and the compression actions.

3. The method of claim 1 or 2, further comprising:
generating, for each tile stack, a tile stack subset that includes fewer tiles than the tile stack;
generating, for each tile stack, an inference input derived from the tile stack subset; and
executing the trained artificial intelligence model on the inference input to generate the tile stack score for the tile stack.

4. The method of any one of claims 1 to 3, wherein performing machine learning inference on each tile stack using the trained artificial intelligence model comprises executing a segmentation network to generate, for each tile stack, a segmentation mask that assigns a useful label or a non-useful label to each pixel location of the tile stack.

5. The method of claim 4, wherein compressing the tile stacks according to the compression actions selected for the tile stacks comprises:
generating, for each tile stack, a modified tile stack by:
assigning a constant pixel value to pixel locations identified as non-useful by the segmentation mask, and
retaining original pixel values for pixel locations identified as useful by the segmentation mask; and
compressing each modified tile stack according to the compression action selected for the tile stack that corresponds to the modified tile stack optionally, wherein compressing the tile stacks according to the compression actions selected for the tile stacks comprises:
applying the lossless compression action to useful pixel locations identified by the segmentation mask when the compression action selected for a tile stack is the lossless compression action;
applying the lossy compression action with a first lossy quality parameter to useful pixel locations identified by the segmentation mask when the compression action selected for the tile stack is the lossy compression action; and
applying the lossy compression action with a second lossy quality parameter to non-useful pixel locations identified by the segmentation mask when the compression action selected for the tile stack is the lossy compression action, the second lossy quality parameter having a lower quality level than the first lossy quality parameter.

6. The method of any one of claims 1 to 5, wherein compressing the tile stacks according to the compression actions selected for the tile stacks comprises:
determining, for each tile stack, a tile count value that equals a number of tiles in the tile stack;
selecting image compression for the tile stack when the tile count value is less than or equal to a tile count threshold; and
selecting video compression for the tile stack when the tile count value is greater than the tile count threshold.

7. The method of any one of claims 1 to 6, selecting the compression action comprises:
selecting the lossless compression action for each tile stack having the tile stack score less than a first threshold;
selecting the discarding action for each tile stack having the tile stack score greater than a second threshold; and
selecting the lossy compression action for each tile stack having the tile stack score greater than or equal to the first threshold and less than or equal to the second threshold.

8. The method of any one claims 1 to 7, further comprising:
selecting, for a first tile stack of the tile stacks, the lossless compression action or the lossy compression action as a video compression action;
ordering tiles of the first tile stack across the one or more spectral bands according to center wavelengths of the one or more spectral bands to form a tile sequence having a monotonically increasing ordering in wavelength or a monotonically decreasing ordering in wavelength;
providing tiles of the tile sequence to a video encoder so that each tile of the tile sequence is provided as a frame;
receiving, from the video encoder, a compressed video bitstream for the tile sequence; and
storing the compressed video bitstream as at least a portion of the compressed tile stack data for the first tile stack.

9. The method of any one of claims 1 to 8, further comprising:
selecting, for each tile stack selected for the lossy compression action, a lossy quality parameter based on the tile stack score for the tile stack; and
compressing the tile stack selected for the lossy compression action using the lossy quality parameter.

10. The method of any one of claims 1 to 9, wherein assembling the compressed tile stack data into the compressed image data file comprises:
further compressing, in the compressed image data file, the compressed tile stack data for a first tile stack together with the compressed tile stack data for at least one other tile stack.

11. A spacecraft, comprising:
a processing system configured to:
capture image data from at least one imaging sensor onboard the spacecraft and generating an image stack including one or more spectral bands;
divide the image stack into one or more tile stacks, each tile stack including one or more tiles corresponding to a common spatial region within the image stack and one or more spectral bands of the image stack;
perform machine learning inference on each tile stack using a trained artificial intelligence model and generating for each tile stack a tile stack score that quantitatively represents a predicted usefulness of the tile stack for at least one mission objective;
select, for each tile stack, a compression action that is a lossless compression action, a lossy compression action, or a discarding action, the compression action for the tile stack being selected based on the tile stack score generated for the tile stack;
compress the tile stacks according to the compression actions selected for the tile stacks and generating compressed tile stack data for tile stacks that are not subject to the discarding action;
assemble the compressed tile stack data into a compressed image data file; and
transmit the compressed image data file to the ground station over a downlink communication channel.

12. The spacecraft of claim 11, wherein the processing system is further configured to:
extract imaging-sensor metadata associated with the image data; and
add the imaging-sensor metadata and tile stack metadata to the compressed image data file, the tile stack metadata describing one or more of the tile stacks, the tile stack scores, and the compression actions.

13. The spacecraft of claim 11 or 12, wherein the processing system is further configured to:
generating, for each tile stack, a tile stack subset that includes fewer tiles than the tile stack;
generating, for each tile stack, an inference input derived from the tile stack subset; and
executing the trained artificial intelligence model on the inference input to generate the tile stack score for the tile stack.

14. The spacecraft of any one of claims 11 to 13, wherein the processing system is configured to perform machine learning inference on each tile stack using the trained artificial intelligence model by executing a segmentation network to generate, for each tile stack, a segmentation mask that assigns a useful label or a non-useful label to each pixel location of the tile stack.

15. A non-transitory processor-readable medium having stored thereon processor-readable instructions configured to cause one or more processors in a processing system to perform a method for reducing a data volume downlinked from a spacecraft to a ground station in accordance with any one of claims 1 to 10.
